# EUROPÄISCHE PATENTSCHRIFT

(11) **EP 1 157 809 B1**
(45) Veröffentlichungstag und Bekanntmachung des Hinweises auf die Patenterteilung: **21.12.2005**
(21) Anmeldenummer: 01111128.3
(22) Anmeldetag: 09.05.2001
(51) Int. Cl.: B29C 70/32

(54) **Abwickelbare Bauteile aus Faserverbundwerkstoffen, Verfahren zu deren Herstellung und deren Verwendung**
Windable components made of fiber composite materials, method for producing such and their use
Composants enroulables en matériau composite avec fibres, procédé pour leur fabrication, et leur utilisation

(30) Priorität: 24.05.2000 DE 10025628
(43) Veröffentlichungstag der Anmeldung: 28.11.2001
(73) Patentinhaber: SGL CARBON AG, 65203 Wiesbaden (DE)
(72) Erfinder: Guckert, Werner, 86674 Baar (DE); Rauch, Siegfried, Valencia, CA 91355 (US)

## Beschreibung

Diese Erfindung betrifft abwickelbare Bauteile aus einem Faserverbundwerkstoff, ein Verfahren zu deren Herstellung sowie deren Verwendung.

Unter dem Begriff "abwickelbare Bauteile" wird im Sinne dieser Erfindung ein dreidimensionales Bauteil verstanden, dessen Körper durch geometrisches Transformieren in eine Ebene abgewickelt und auf diese Weise zeichnerisch dargestellt werden kann. Unter derartige Bauteile fallen beispielsweise Rohre oder Zylinder, die einen kreisförmigen, ovalen oder auch eckigen, z. B. rechteckigen oder quadratischen Querschnitt aufweisen und innen hohl sind.

Das Herstellen von rohrförmigen Bauteilen aus Faserverbundwerkstoffen ist grundsätzlich bekannt. Derartige Bauteile werden z. B. durch Übereinanderlaminieren von mehreren mit einem Harz, vorzugsweise einem Kunstharz imprägnierten Gewebelagen, sogenannten Prepregs, hergestellt. Das Herstellen von abwickelbaren Faserverbundwerkstoffen, die frei von Strukturfehlern sind, ist schwierig und wird nach einem aufwändigen Mehrstufenverfahren durchgeführt. Um ein spalten- und faltenfreies Produkt zu erhalten, werden dazu in der Regel ca. 2 bis 4 Lagen Gewebe übereinandergelegt oder -gewickelt. Anschließend muss der so erhaltene Körper einer Behandlung unterworfen werden, bei der das in ihm enthaltene Harz aushärtet. Vor dem Fortsetzen des Herstellungsprozesses muss in der Regel die Oberfläche des gehärteten Körpers geschliffen werden, um Unebenheiten auf ihr zu beseitigen und sie für das Aufnehmen weiterer Prepreglagen vorzubereiten. Ein derartiges Zwischenhärten wird sehr häufig im Zusammenhang mit dem Formgeben und Verdichten mittels des in der Fachwelt bekannten Vakuumsackverfahrens vorgenommen, für das eine spezielle Vorrichtung erforderlich ist. Dabei wird ein für das Vakuumsackverfahren verwendeter Autoklav zusätzlich auf die gewünschten Härtungsbedingungen eingestellt. Nach einem solchen Zwischenhärten, das auch zeitaufwändig ist, werden dann weitere Gewebelagen auf die Oberfläche aufgebracht. Diese Verfahrensfolge wird so lange eingehalten, bis die gewünschte Wandstärke des Körpers, der hergestellt werden soll, erreicht ist. Beim Herstellen hochwertiger Faserverbundwerkstoffkörper müssen bis zu drei oder auch mehr derartiger Wickelprozesse mit Zwischenhärtungen durchgeführt werden. Dieses Verfahren ist somit sehr zeitaufwändig und kostenintensiv. Dies hat zur Folge, dass danach hergestellte Bauteile aus Kostengründen nur dort eingesetzt werden, wo sich Bauteile aus anderen Werkstoffen sehr ungünstig verhalten oder versagen.

Aus US-A-5 638 870 ist ein rohrförmiges Bauteil bekannt, das aus einem Gewebe hergestellt ist, das sich aus Verstärkungsfasern, die sich in Kettrichtung des Gewebes erstrecken, die der Axialrichtung des rohrförmigen Körpers entspricht, und aus thermoplastischen Harzfasern zusammensetzt, die sich in Schussrichtung des Gewebes erstrecken und mit den Verstärkungsfasern verflochten sind. Ein Beispiel für den Aufbau des aus dieser Druckschrift bekannten Bauteils umfasst eine erste und eine zweite Gewebelage, zwischen die eine Zwischenlage aus gleichmäßig orientierten Fasern angeordnet ist. Diese Lage aus gleichmäßig orientierten Fasern ist aus Faserbündeln hergestellt, die Verstärkungsfasern und thermoplastische Harzfasern aufweisen. Der so hergestellte Verbund wird auf einen Kern (Dorn) aufgebracht, anschließend erfolgt unter Druck und Hitze die Formgebung, wobei um den Verbund von außen eine Form zur äußeren Formgebung angebracht wird.

Nachteile dieses Verfahrens sind zum einen das aufwändige Verfahren und zum anderen die Notwendigkeit, ein äußeres Formgebungswerkzeug verwenden zu müssen.

Es sind auch Wickeltechniken zum Herstellen von rohrförmigen Bauteilen bekannt. US-A-5 047 104 beschreibt Voll- oder Hohlprofile aus Fasermaterialien, die mit flüssigem Harz imprägniert und dann mit nicht imprägnierten Fasern oder Monofilen aus organischen Materialien umwickelt werden. Diese organischen Materialien werden so ausgewählt, dass die Schrumpfkräfte noch aktiv sind, bevor das verwendete reaktive Harz die Gelphase erreicht. Eine Bedeckung der zuerst genannten Fasermaterialien durch die Wickelfasern von nur etwa 12% ist ausreichend. Die aufgebrachten organischen Fasern schrumpfen bei einem sich anschließenden Härtungsschritt und dringen in das Harz ein. Durch diese Vorgehensweise ist es möglich, genaue kreisförmige Querschnitte bei den Bauteilen zu erzeugen, wobei keine externen Formgebungseinheiten verwendet werden müssen. Derartige Bauteile eignen sich insbesondere als Kabel oder Drähte zum Verstärken von Beton. Sie weisen auch eine hohe Witterungsbeständigkeit auf.

EP-A-0 443 470 beschreibt ein Bauteil aus Faserverbundwerkstoffen mit einem rohrförmigen Bereich und wenigstens einem planen Flansch. Auf einen Dorn wird eine Wicklung mit sich unter einem Winkel zur Achse des Kerns kreuzenden Fasersträngen aufgebracht. Anschließend erfolgt an den Enden des rohrförmigen Bereiches ein konisches Erweitern über einen Spreizkörper. Die Wicklung wird beidseitig des rohrförmigen Bereiches jeweils über einen solchen Spreizkörper gewickelt, und auf den rohrförmigen Bereich der Wicklung wird von außen ein Formwerkzeug aufgesetzt.

DE-A-40 21 547 beschreibt ein Verfahren zum Herstellen von Faserverbundkörpern, wobei Fasern nahezu porenfrei um einen Trägerkörper gewickelt werden. Dazu werden Faserbänder verwendet, in denen die Einzelfasern ohne Hohlraumbildung mit Matrixmaterial umgeben sind. Es können auch mit Matrixmaterial lückenlos umhüllte Einzelfasern aufgewickelt werden. Beim nachfolgenden heißisostatischen Pressen werden Matrixmaterial, Fasern und Trägerkörper durch fließendes Verformen verbunden. Durch das Verwenden von Faserbändern, die einen im wesentlichen rechteckförmigen Querschnitt aufweisen, wird ein Einbetten der Faserbandschicht in das Matrixmaterial erzielt, wodurch das Verschieben der Fasern beim Verwenden des Bauteils vermieden wird. Außerdem ist durch den Rechteckquerschnitt des Faserbandes ein zwischenraumfreies Umwickeln möglich.

GB-A-2 127 771 beschreibt das Herstellen von länglichen irregulär geformten Körpern, indem auf einen temporären Kern eine erste Lage zusammengesetzt aus mehreren länglichen Gewebesegmenten, welche eine Vielzahl von kontinuierlich sich über die Länge des Körpers erstreckenden Fasern, z.B. Kohlenstofffasen, enthalten, aufgelegt und diese anschließend mit einer zweiten Lage aus Endlosgam umwickelt wird, wobei das Endlosgam sich im wesentlichen rechtwinklig zu den kontinuierlichen Fasern in den Gewebesegmenten erstreckt. Weitere alternierende Schichten aus Gewebesegmenten und senkrecht dazu gewickelten Endlosgarnen werden hinzugefügt, bis die gewünschte Dicke erreicht ist. Nach einer zweiten Variante werden in Anpassung an die spätere Form des Körpers Gewebelagen auf einen Kern gewickelt, bis die gewünschte Starke erreicht ist. Der Kern ist somit im wesentlichen durch das Gewebe bedeckt, das eine Vielzahl von Kettfäden, die peripher um den Kern gewickelt sind, und eine Vielzahl von diese kreuzenden Schussfäden enthält, die zu den Kettfäden orthogonal angeordnet sind und sich über die Länge des Körpers erstrecken. Die nach einer dieser beiden Varianten erhaltenen Körper werden dann mit Thermo- oder Duroplasten imprägniert und das Harz wird ausgehärtet. Gegebenenfalls folgt eine Carbonisierung. Wesentliches Merkmal beider Varianten ist, dass die gewickelten Lagen in trockenem Zustand aufgebracht und in einem späteren Verfahrensschritt imprägniert werden.

Bei diesem trockenen Aufbau muss das Gewebe bzw. die Gewebesegmente fixiert werden, um ein Abrutschen zu verhindern.
In einer Weiterentwicklung werden die übereinander gewickelten Lagen mit durchgehenden Perforationen versehen, welche beim Imprägnieren das Eindringen des Harzes und beim Carbonisieren das Austreten flüchtiger Bestandteile erleichtern.

DE-A 19 49 115 beschreibt ein Verfahren und eine Vorrichtung zur Herstellung von Verbundrohren mit hoher Festigkeit gegenüber Zugspannungen und Biegebeanspruchung. Kunstharzimprägnierten Fasern, z.B. Glas-, Kohlenstoff o.a. Bewehrungsfasern, werden unter einer vorbestimmten hohen Spannung spiral- oder kreisförmig in Umfangsrichtung auf ein Innenrohr aus Metall, keramischem Material, Kunststoff oder Zement aufgewickelt, wobei die Spannung in jeder Faser so gesteuert wird, dass in allen Fasern im wesentlichen dieselbe Spannung vorliegt. Für Glasfasern beträgt die Spannung mindestens 1.400 kg/cm².
Das erfindungsgemäße Verfahren umfasst die Stufen Imprägnieren der Fasern mit Harz, Anordnen der imprägnierten Fasern mindestens teilweise rund um die sich drehende Spannrolle, Ziehen der imprägnierten Fasern von der Spannrolle durch Drehen des Innenrohres, wobei die Fasern durch Adhäsion ein Drehmoment auf die Spannrolle aufbringen und diese dadurch zur Drehung zwingen, und Aufbringen eines Bremsmomentes auf die Spannrolle. Es können auch mehrere Spannrollen in Faserlaufrichtung vorgesehen werden, wobei auf jede ein Bremsmoment aufgebracht wird. Auf diese Weise können sehr hohe Spannungen in den harzimprägnierten Fasern erzeugt werden.
Die Vorrichtung zur Herstellung der Verbundrohre umfasst Mittel zum Drehen des Innenrohres um seine Längsachse, einen Vorrat an Fasermaterial, von dem eine Vielzahl von Fasern gleichzeitig abgezogen und auf das sich drehende Innenrohr aufgewickelt werden kann, einen Behälter mit Harz zur Imprägnierung der abgezogenen Fasern vor dem Aufwickeln auf das Innenrohr, mindestens eine drehbare Spannrolle, um welche die imprägnierten Fasern mindestens teilweise gewickelt werden, so dass die Fasern durch Adhäsion ein Drehmoment auf die Spannrolle aufbringen und diese dadurch drehen, Vorrichtungen zum Aufbringen eines veränderbaren Bremsmomentes auf jede Spannrolle, sowie optional Rechen zum Auffächern der Faserbündel und Fühnmgsvorrichtungen zum Abflachen der Faserbündel.

Die Spannung in den aufgewickelten Fasern wird verursacht durch die in den Fasern während des Auflaufens auf die Spannrolle herrschende Spannung, das auf die Spannrolle aufgebrachte Bremsmoment und das Adhäsionsdrehmoment der Fasern auf der Spannrolle. Letzteres wird durch den Harzgehalt der imprägnierten Fasern bestimmt Optimal ist ein massebezogener Harzgehalt von 14 bis 16 %.

EP-A 0 934 820 offenbart einen Schichtstoff mit große Druckfestigkeit, guter Hitzebeständigkeit und geringer Permeabilität gegenüber Fluiden, der aus übereinander im Wechsel und parallel angeordneten Lagen von Graphitfolien und Metallfolien besteht und in dem die Graphitfolien mit den Metallfolien verbunden sind. Der Schichtstoff wird nach oben und unten durch Metallfolien begrenzt, die auf ihren nach außen weisenden Flachseiten vollständig mit einer gasdichten Folie aus einem organischen Polymer, beispielsweise PTFE, mit einer Dauertemperaturbeständigkeit von mindestens 150°C bedeckt und verbunden sind. Vorzugsweise sind die Verbindungen zwischen den Folien klebstofffrei. Die Metallfolien sind z.B. mit den Kunststofffolien thermisch, ggf. unter Druckeinwirkung, verschweißt und die Graphitfolien sind mit den Metallfolien bei erhöhter Temperatur verpresst. Der erfindungsgemäße Schichtstoff wird vorwiegend für die Herstellung von Flachdichtungen verwendet.

US-A-4 555 113 beschreibt das Herstellen eines Schaftes, z.B. für Golfschläger, wobei auf einen Dorn eine Harzschicht und darauf ein Gewebe aufgebracht werden. Über dieses Gebilde werden zwei verschiedene Arten von Kohlenstoffbändern spiralförmig in zueinander entgegengesetzter Wickelrichtung gewickelt, so dass durch diese Wickeltechnik viele Kreuzungsbereiche erhalten werden. Anschließend wird die Oberfläche des Wickelkörpers mit einem Cellophanband abgedeckt und das Harz ausgehärtet. Das Cellophanband und der innere Formdorn werden sodann abgenommen, wodurch der gewünschte Schaft erhalten wird.

Die vorgenannten Verfahren haben den Nachteil, dass die Verfahrensfolge viele Schritte umfasst, die nicht nur zeitsondern auch kostenintensiv sind. Insbesondere muss bei vielen der gebräuchlichen Herstellungsverfahren, um Verwerfungen und Fehlstellen im Wandaufbau zu vermeiden, der Wandaufbau der Wickelkörper in mehreren Schritten durchgeführt werden. D.h., nach dem Aufbringen einer bestimmten, relativ geringen Zahl von Wickellagen muss der Wickelkörper von der Wickelmaschine abgenommen und mit Harz imprägniert und das Harz ausgehärtet werden oder, falls der Wickelkörper bereits Harz enthält, nur das Harz ausgehärtet werden. Um Unebenheiten der Oberfläche des Wickelkörpers zu beseitigen und ein gutes Haften der nachfolgenden Wickellagen zu gewährleisten, muss die Oberfläche des Wickelkörpers nun noch überschliffen werden. Dann muss der so behandelte Wickelkörper wieder in die Wickelmaschine eingespannt werden und das Wickeln geht weiter. In vielen Fällen muss dieser Vorgang mehrmals wiederholt werden, um einen fertigen Wickelkörper zu erhalten. Ein weiteres Problem ist das Nachverdichten der Wickelkörper. Darunter versteht man das weitere Verdichten und Verfestigen eines Harz enthaltenden Wickelkörpers. Man bedient sich hierzu der bekannten Vakuumsacktechnik, bei der nach einer Variante nach dem Evakuieren des im Vakuumsack befindlichen Bauteils der äußere Atmosphärendruck von ca. 1 bar verdichtend einwirkt. Nach einer zweiten, bevorzugten Variante, bei der sich der Vakuumsack in einem Autoklaven befindet, wird nach dem Evakuieren noch zusätzlich ein Druckmedium aufgepresst, so dass der Verdichtungsdruck in bestimmten Grenzen beliebig verstärkt werden kann. In der Folge dieses Verdichtens treten jedoch häufig Faltenbildungen und Delaminationen in den Schichten der Verbundkörper auf. Dadurch entstehen zwangsläufig Fehlstellen, die insbesondere die mechanischen und elektrischen Eigenschaften der Verbundkörper beeinträchtigen. Ein Herstellen hochwertiger Verbundkörper mit reproduzierbaren Eigenschaftsniveaus ist auf diese Weise nur unter unverhältnismäßig großem Aufwand möglich. Beispielsweise haben auf herkömmlichem Wege hergestellte elektrische Heizelemente häufig untereinander und auch in sich ungleiche elektrische Widerstände, wodurch ihr Gebrauchswert sinkt. Auf herkömmliche Weise hergestellte tragende Bauteile müssen deshalb mit einem größeren Sicherheitsbeiwert konstruiert werden, was ebenfalls zu einer Kostenerhöhung führt.

Der Erfindung lag daher das Problem zugrunde, ein technisch einfacheres und wenig aufwändiges Verfahren zum Erzeugen von abwickelbaren Bauteilen aus Faserverbundwerkstoffen zu schaffen, die zudem frei von Fehlstellen infolge Faltenbildung oder Verschiebung von Teilen gewickelten Materials sind und die gleichmäßigere und verbesserte mechanische und elektrische Eigenschaften aufweisen sowie die ein verbessertes Verhalten beim mechanischen Bearbeiten zeigen. Außerdem soll ein stabiles abwickelbares Bauteil mit hervorragenden mechanischen, chemischen und elektrischen Eigenschaften geschaffen und es sollen besonders günstige Verwendungen hierfür angegeben werden.

Zum Lösen dieser technischen Probleme wird gemäß der hier beschriebenen Erfindung ein Verfahren zum Herstellen von abwickelbaren Bauteilen aus Faserverbundwerkstoffen durch Aufbringen von mindestens einer Lage eines mit einem Harz imprägnierten Gewebes oder Prepregs und jeweils nachfolgend mindestens einer Lage aus mit einem Harz getränkten oder harzfreien, gewickelten Fäden, Garnen, Rovings oder Bändern auf einen formgebenden, temporären Dorn unter Anwenden einer mindestens gleichbleibenden Fadenspannung beim Wickeln einer jeden Lage aus Fäden, Garnen, Rovings oder Bändern, wobei die Außenschicht des Bauteils aus den gewickelten Fäden, Garnen, Rovings oder Bändern besteht und das erhaltene Bauteil nach dem Wickelprozess gehärtet oder gehärtet und carbonisiert oder gehärtet und carbonisiert und graphitiert wird, angegeben.

Die nachstehenden Begriffe sollen im Sinne der Erfindung die folgende Bedeutung haben:
Garne werden durch Verdrillen oder Verspinnen von Endlos- oder Stapelfasern hergestellt. Für das Verwenden in dem erfindungsgemäßen Verfahren müssen sie eine Zugfestigkeit haben, die ein Aufwickeln unter einer Fadenspannung von mindestens 10 N ermöglicht.
Rovings sind durch parallel angeordnete, nicht miteinander verdrillte Endlosfilamente oder Einzelfasern gebildete textile Stränge.
Bänder bestehen aus parallel nebeneinander angeordneten Rovings, Garnen oder Fäden, wobei die Rovings, Garne oder Fäden entweder nicht miteinander verbunden oder mittels quer zur Längsrichtung der Bänder verlaufender Hilfsfäden in ihrer Lage fixiert sind.

Erfindungsgemäß wird eine Kombination von an sich bekannten Laminier- und Wickelverfahren unter Verwenden von mindestens zwei bestimmten Materialien unter Einhalten bestimmter Bedingungen beschrieben. Erfindungswesentlich ist dabei, dass das Wickeln aller Lagen aus Fäden, Garnen, Rovings oder Bändern unter Anwenden einer mindestens gleichbleibenden Fadenspannung geschieht, die so groß gewählt ist, dass die darunter befindliche Lage oder die darunter befindlichen Lagen aus dem mit Harz getränkten Gewebe oder Prepreg angedrückt und verdichtet und in ihren Positionen fixiert wird/werden. Vorzugsweise werden die Lagen aus den Fäden, Garnen, Rovings oder Bändern so aufgewickelt, dass jede Lage mit einer Fadenspannung gewickelt wird, die größer als die Fadenspannung ist, mit der die zuvor gewickelte Lage aus Fäden, Garnen, Rovings oder Bändern gewickelt worden ist. Ein weiteres Merkmal der Erfindung ist es, dass die letzte, äußerste Wickelschicht stets aus einer Lage aus Fäden oder Garnen oder Rovings oder Bändern besteht. Durch diese Vorgehensweise ist es möglich, ein optimales und über die Länge und den Querschnitt gleichmäßiges Verdichten des Bauteils zu erzielen. Entsprechend werden durch das Verfahren Bauteile hergestellt, die eine gleichmäßige, fehlerfreie Struktur aufweisen und bei denen eine gleichmäßige Verteilung der mechanischen und elektrischen Kenndaten, sowohl in axialer als auch in radialer Richtung auf einem höheren Niveau erreicht wird. Ein gesondertes Nachverdichten und Aushärten zwischen dem Aufbringen der Wickellagen mit der Folge von zeitaufwändigen Unterbrechungen des Wickelprozesses ist nicht mehr erforderlich. Auch ein Arbeiten nach dem vergleichsweise zeitintensiven und teuren Vakuumsackverfahren ist bei Anwendung des erfindungsgemäßen Verfahrens nicht mehr notwendig. Das erfindungsgemäße Verfahren ist folglich erheblich rationeller und wirtschaftlicher und es werden mit ihm Bauteile von erheblich verbesserter Qualität zugänglich. Insbesondere können die Nachteile der bekannten Verfahren (Rohre nur aus Gewebeprepreg bzw. Rohr nur aus Rovingwicklungen) vermieden werden, wobei aber deren Vorteile ausgenutzt werden.

Die erfindungsgemäßen abwickelbaren Bauteile können in vielen Gebieten verwendet werden. Bevorzugt werden sie in carbonisiertem oder graphitiertem Zustand als Schutzrohre, Heizrohre, Heißgasrohre, thermische Isolierungen, beispielsweise beim Herstellen von Halbleitermaterialien, als Düsen, aber auch als Tragrohre, Stützprofile oder Heißpressmatrizen verwendet. Sie lassen sich hervorragend und maßgenau z.B. durch Sägen, Drehen, Fräsen oder Bohren mechanisch bearbeiten, so dass sie mit Durchführungen, Sichtlöchern, Flanschanschlüssen oder anderen Vorrichtungen versehen werden oder aus ihnen beispielsweise mäanderförmige Heizelemente hergestellt werden können. Es ist sogar möglich, Nägel durch solche Bauteile hindurchzutreiben, ohne diese zu zerstören. Hervorzuheben ist auch deren Eignung als Bauteile, insbesondere Rohre für jegliche Verwendung im Chemiebereich, weil die Bauteile dieser Erfindung eine hohe chemische Beständigkeit aufweisen. Die Bauteile besitzen weiterhin eine hohe Schlagzähigkeit und eine hohe Druckfestigkeit. Bei graphitierten, rohrförmigen Bauteilen liegt die Druckfestigkeit im Bereich von etwa 400 N/mm² und ist somit um den Faktor 3 bis 4 höher als bei den durch die bekannten Wickelverfahren hergestellten Rohren. Diese höhere Festigkeit und höhere Dichte ist insbesondere durch das Nachverdichten mit den Fäden, Garnen, Rovings oder Bändern möglich. Lediglich ausgehärtete, nicht carbonisierte, nicht graphitierte Bauteile können, wenn sie Walzenform haben, beispielsweise als Transport-, Stütz-, Leit-, Anpress- oder Auftragsrollen für das Produzieren oder Weiterverarbeiten von Materialbahnen wie Papier, Folien, Textilien oder Druckerzeugnissen verwendet werden.

Es zeigt sich somit, dass nach dem erfindungsgemäßen Verfahren eine große Vielzahl von Möglichkeiten besteht, abwickelbare Bauteile herzustellen und dass solche Bauteile gezielt nach Bedarf geschaffen werden können. Wesentliche Einflussgrößen dabei sind zum einen die Abfolge der Lagen beim Wickelprozess sowie deren Aufbau und Qualität, zum zweiten die Auswahl der verwendeten Gewebe, Prepregs sowie Faser- und Filamentmaterialien, zum dritten die Wahl der verwendeten Harze, bzw. Kohlenstoffträger, zum vierten die Wahl der Fadenspannung beim Wickeln der Lagen aus Fäden, Garnen, Rovings oder Bändern, zum fünften das Nachbehandeln nach dem Erhalten des gewickelten und ausgehärteten Bauteils, d.h., ob das Bauteil noch carbonisiert oder carbonisiert und graphitiert wird und schließlich, ob das Bauteil nach dem Carbonisieren oder nach dem Graphitieren noch nachverdichtet wird, d.h. ob das offene Porensystem des Bauteils durch einen oder mehrere Imprägnierschritte mit einem Imprägniermittel gefüllt wird und das Bauteil dann nochmals carbonisiert oder graphitiert wird. Durch Variieren der genannten Einflussfaktoren kann eine Vielzahl von Herstellungsvarianten erreicht werden, die alle in den Umfang der Erfindung fallen.

Was die Abfolge der Wickellagen betrifft, so kann auf eine Lage Gewebe oder Prepreg eine Lage aus Faden, Garn, Roving oder Band folgen. Es können sich aber auch, und dies ist bevorzugt, an diese zwei Lagen weitere Lagen von Gewebe oder Prepreg und von Fäden, Garnen, Rovings oder Bändern im Wechsel anschließen. Nach einer anderen Variante werden z.B. zuerst mehr als eine Lage eines Gewebes oder Prepregs auf den temporären Dorn oder Kern aufgewickelt und dann wird auf diese mindestens zwei Lagen aus Gewebe oder Prepreg eine Lage aus Fäden, Garn, Roving oder Band gewickelt. Auch hier ist es möglich, dass sich dieser Aufbau aus mehr als einer Lage aus Gewebe oder Prepreg und einer Lage aus Fäden, Garn, Roving oder Band in radialer Richtung ein- oder mehrmals wiederholt. Nach einer nochmals veränderten Variante ist die Abfolge der Lagen nicht wie in den vorhergehenden Beispielen konstant, sondern sie wird frei gewählt. Danach ist es beispielsweise möglich, zuerst zwei Lagen aus einem Prepreg, dann eine Lage aus einem Faden, Garn, Roving oder Band, sodann drei Lagen aus einem Gewebe oder Prepreg, dann wieder eine Lage aus einem Faden, Garn, Roving oder Band und zum Schluss eine Lage aus einem Gewebe oder Prepreg, gefolgt von einer letzten, äußeren Lage aus Faden, Garn, Roving oder Band aufzubringen. Wie nachfolgend noch beschrieben werden wird, können zwischen die hier beschriebenen Wickellagen noch Lagen aus geeignetem Filz oder geeigneter Folie oder beiden durch Wickeln eingebracht werden. Das zum Wickeln verwendete Gewebe kann frei von Harz sein. Vorzugsweise ist es aber mit einem nicht ausgehärteten Harz imprägniert und hat dann Prepregcharakter. Wenn im Sinne dieser Erfindung von einer Wickellage aus Faden, Garn, Roving oder Band gesprochen wird, handelt es sich vorzugsweise um zwei sich unter einem bestimmten Winkel kreuzend zueinander aufgebrachte Wickellagen aus Faden, Garn, Roving oder Band. Es ist aber auch möglich, dass eine solche Wickellage aus nur einer Lage aus Faden, Garn, Roving oder Band besteht. Die verwendeten Fäden, Garne, Rovings oder Bänder können mit einem Harz imprägniert oder überzogen sein, das nicht ausgehärtet ist, oder sie werden ohne einen Harzüberzug eingesetzt. Nach einer der bevorzugten Varianten wird das abwickelbare Bauteil aus alternierenden Schichten aus Gewebeprepreg und Rovings oder Bändern hergestellt, wobei die einzelnen Roving- oder Bandlagen von der inneren zur äußeren Lage mit steigender Zug- oder Fadenspannung aufgewickelt werden. Dadurch entsteht ähnlich wie bei einer Seilwinde ein Verstärken des Verdichtungseffektes in den darunter liegenden Lagen.

Es können Gewebe der verschiedenen Bindungstypen wie z.B. Leinen, Köper oder Satin verwendet werden. Bevorzugt sind Köper und Leinen. Die Gewebe können aus allen üblichen Faserarten bestehen, solange die Bauteile nur im ausgehärteten Zustand verwendet werden. Sie können aber auch aus Metallfasern oder -Filamenten, beispielsweise aus Molybdän bestehen. Wenn die Bauteile carbonisiert oder carbonisiert und graphitiert sein sollen, bestehen die Gewebe aus Cellulose-, Poyacrylnitril-, Molybdän- oder, vorzugsweise aus Kohlenstoff- oder Graphitfasern. Nach einer besonders bevorzugten Variante, die zu höchst belastbaren Bauteilen führt, bestehen die Gewebe aus Rovings aus graphitierten Kohlenstofffasern, insbesondere aus Hochmodulgraphitfasern.
Kohlenstofffasern sind im Sinne der Erfindung solche aus Kohlenstoff bestehenden Fasern, die bis auf Temperaturen von weniger als 1800°C, vorzugsweise auf 1000 bis 1400°C erhitzt worden sind. Graphitfasern sind solche aus Kohlenstoff bestehenden Fasern, die auf Temperaturen von mindestens 1800°C, vorzugsweise auf Temperaturen von 2200 bis 2700°C erhitzt worden sind. Zum Carbonisieren werden die Bauteile in nicht oxidierender Atmosphäre auf Temperaturen im Bereich von 800 bis 1600°C, vorzugsweise von 900 bis 1400°C erhitzt. Zum Graphitieren werden sie unter nicht oxidierenden Bedingungen auf Temperaturen im Bereich von 1800 bis 3000°C, vorzugsweise von 2000 bis 2700°C erhitzt.

Die für das erfindungsgemäße Verfahren verwendeten Garne bestehen aus miteinander versponnenen Stapelfasern aus Wolle, Cellulose, Polyacrylnitril oder Kohlenstoff. Für das Herstellen sehr hochwertiger Bauteile werden graphitierte Kohlenstoffgarne verwendet.
Die für das Verfahren verwendeten Fäden können durch Verdrillen von Garnen oder von Rovings hergestellt sein. Die erfindungsgemäß verwendeten Rovings bestehen aus parallel zueinander angeordneten Einzelfilamenten aus Cellulose, Polyacrylnitril oder aus Kohlenstoff- oder Graphitfasern. In Sonderfällen können auch Metallfasern, beispielsweise molybdänhaltige Metallfilamente verwendet werden. Bevorzugt werden Rovings aus sehr vielen Kohlenstoff- oder Graphitfilamenten, nämlich aus einer Anzahl von Kohlenstoff- oder Graphitfilamenten im Bereich von 3000 bis 60000 verwendet. Bevorzugt werden Rovings mit einer Einzelfilamentanzahl von 6000 bis 24000 aus einer Graphitfaser, die auf Basis von Polyacrylnitril hergestellt worden ist, verwendet. Der Roving aus Kohlenstoff- oder Graphitfilamenten hat bevorzugt eine Zugfestigkeit im Bereich von 2000 bis 3600 MPa und bevorzugt eine Dichte im Bereich von 1,75 bis 1,90 g/cm³.
Bänder bestehen aus mehreren nebeneinander angeordneten Fäden, Garnen oder Rovings, die auch durch textile querliegende Verbindungselemente in ihrer Lage fixiert sein können.
Durch das Wickeln der Faden-, Garn-, Roving- bzw. Bandlagen werden die darunter liegenden Lagen des Bauteils verdichtet, und die Faser- und Harzverteilung in den Gewebe- oder Prepreglagen wird vergleichmäßigt.

Wenn Bauteile für Anwendungen bei Temperaturen oberhalb von 1800°C angefertigt werden sollen, ist es vorteilhaft, alle dafür benötigten textilen Bestandteile in graphitierter Qualität zu verwenden. Dadurch wird ein Verziehen der Bauteile beim Herstellungsprozess vermieden.

Als Harze für das Imprägnieren der Gewebe sowie gegebenenfalls der Fäden, Garne, Rovings und Bänder und für das Herstellen der Prepregs können alle aus dem Stand der Technik dafür bekannten Natur- und Kunstharze aber auch Peche oder Pech-Harz-Mischungen verwendet werden. Bevorzugt werden jedoch Epoxid-, Furan- und Phenolharze eingesetzt, wobei Phenolharze besonders bevorzugt sind, wenn die Bauteile nach dem Aushärten noch carbonisiert oder carbonisiert und graphitiert werden sollen.
Wenn ein gewickeltes und ausgehärtetes Bauteil von dem Wickelkern befreit und carbonisiert worden ist, wird es zum Verbessern seiner physikalischen Eigenschaften, speziell seiner Festigkeit, in vielen Fällen noch nachverdichtet. Darunter wird ein Füllen des flüssigkeitszugänglichen Porensystems mit einem Harz, insbesondere einem Kunstharz oder mit einem Pech und ein darauf folgendes Carbonisieren oder Carbonisieren und Graphitieren des so eingebrachten Harzes oder Pechs verstanden. Für diesen Verfahrensschritt, der auch mehrmals und auch mit graphitierten Bauteilen durchgeführt werden kann, werden vorzugsweise Phenolharze oder Peche mit einem großen Kohlenstoffrückstand beim Carbonisieren oder auch Mischungen aus Kunstharzen und Pechen verwendet.

Die beim Aufwickeln der Fäden, Garne, Rovings oder Bänder verwendeten Zugspannungen, im folgenden Fadenspannungen genannt, können in einem großen Bereich variiert werden. Die konkret angewandte Fadenspannung hängt von dem durch das Wickeln gewünschten Grad des Verdichtens der Lagen ab, die überwickelt werden sollen, was einen wesentlichen Einfluss auf die Festigkeit und Stabilität des herzustellenden Bauteils hat. Die angewendeten Fadenspannungen variieren im Bereich von 10 bis 300 N. So ist es beispielsweise möglich, eine Faden-, Garn-, Roving- oder Bandspannung je nach der Festigkeit des Fadens, Garns, Rovings oder Bandes oder der Druckempfindlichkeit des unter dieser Wickellage befindlichen Materials von nur etwa 10 bis 20 N anzulegen, jedoch sind auch höhere Fadenspannungen möglich. Vergleichsweise niedrige Fadenspannungen im Bereich von 10 bis 200 N, bevorzugt 10 bis 100 N werden beispielsweise verwendet, wenn die abwickelbaren Bauteile Lagen aus Filz oder aus Graphitfolie enthalten, die bei zu großem radialem Druck mit der Folge des Ausbildens von Inhomogenitäten innerhalb des Bauteils eingeschnürt werden können. Ein Beispiel hierfür wären Zylinder oder Mäntel für Zwecke der thermischen Isolation. Für das Herstellen von Rohren oder mechanisch hoch belasteten Bauteilen ist es zweckmäßig, Fadenspannungen im Bereich von etwa 100 bis 250 N anzuwenden.

Die abwickelbaren Bauteile können beispielsweise für die Verwendung als Transport-, Stütz-, Leit-, Anpress- oder Auftragsrollen für das Produzieren oder Weiterverarbeiten von Materialbahnen wie Papier, Folien, Textilien oder Druckerzeugnissen in der Form von mit Fasermaterialien verstärkten Kunststoffen, die nicht carbonisiert oder graphitiert sind, hergestellt werden. Sie werden dazu nach dem Aufwickeln der Lagen aus der Wickelmaschine genommen und nach einem der bekannten Verfahren einem Prozess zum Härten des Harzes unterworfen. Dabei entsteht eine feste Harzmatrix, durch die die textilen Bestandteile so in das Bauteil eingebunden und über Brücken gehärteten Harzes so miteinander verbunden werden, dass ein hochwertiges Bauteil aus Verbundwerkstoff entsteht. Es folgen dann nur noch die an sich bekannten Prozessschritte des Entfernens des Wickelkerns oder -Dorns und des Bearbeitens und gegebenenfalls Nachbehandeln der Stirnseiten und der Oberflächen.
Für bestimmte größere Beanspruchungen oder für Anwendungen unter hohen Temperaturen bestehen die abwickelbaren Bauteile aus Kohlenstoff oder Graphit, vorzugsweise aus mit Kohlenstoff- oder Graphitfasern verstärktem Kohlenstoff oder aus mit Graphitfasern verstärktem Graphit. Um derartige Bauteile herzustellen, werden die unter Verwenden geeigneter textiler Verstärkungsmaterialien und geeigneter Harze hergestellten Bauteile im ausgehärteten, nicht carbonisierten Zustand unter Ausschluss von oxidierend wirkenden Substanzen carbonisiert. In bestimmten Fällen können sie in diesem Zustand nach dem Fertigbearbeiten bereits verwendet werden. Wenn ihr Datenniveau im einfach carbonisierten Zustand den Anforderungen nicht genügt, können diese Körper ein- oder mehrmals durch Imprägnieren und nachfolgendes Carbonisieren nachverdichtet werden, wodurch eine erhebliche Verbesserung des Datenniveaus, speziell der Festigkeitswerte eintritt. Wenn dies das Anforderungsprofil für die abwickelbaren Bauteile erfordert, werden mit Graphitfasern verstärkte Graphitkörper hergestellt. Dazu werden Bauteile im carbonisierten Zustand noch einer Graphitierungsbehandlung unterworfen. Selbstverständlich kann hierbei auch von einem lediglich ausgehärteten Bauteil ausgegangen werden und es können die Schritte Carbonisieren und Graphitieren nacheinander in einem Arbeitsschritt durchlaufen werden. Die graphitierten Körper können dann nach Bedarf noch wie vorbeschrieben nachverdichtet werden, wobei der mit dem Kohlenstoffträger imprägnierte graphitierte Körper entweder nur carbonisiert oder carbonisiert und graphitiert werden kann. Beim Herstellen von verstärkten Kohlenstoff- und Graphitbauteilen werden bereits beim Wickeln der Wickelkörper vorzugsweise graphitierte Gewebe und Rovings verwendet, um den großen Elastizitätsmodul und die hervorragenden Festigkeitseigenschaften der Graphitfasern, insbesondere der sogenannten Hochmodulgraphitfasern in dem und für das Bauteil auszunutzen und ein Verziehen der Bauteile beim Herstellungsprozess zu verhindern.

Aus dem Vorstehenden folgt, dass das erfindungsgemäße Verfahren in einer Vielzahl von Varianten ausgeführt werden kann und dass danach eine Vielzahl von verschiedenen Arten abwickelbarer Bauteile mit teils sehr unterschiedlichen Eigenschaftsprofilen hergestellt werden können. Welche der verschiedenen Verfahrensvarianten angewendet wird, muß der Fachmann aufgrund seiner Kenntnisse und der technischen Anforderungen an das Bauteil entscheiden. Gegebenenfalls wird er sich dabei einfacher Versuche bedienen, die er unter Verwenden der hier gegebenen Lehren durchführt.

Die Wandstärke der abwickelbaren Bauteile kann im Bereich von wenigen Millimetern bis zu 120 mm liegen. Bei Bauteilen, die nur aus Geweben, Prepregs, Fäden, Garnen, Rovings, Bändern und aus Harz aufgebaut worden sind, liegt die Wandstärke vorzugsweise im Bereich von 3 bis 30 mm, bei Bauteilen, die, wie bei Körpern für den Einsatz in Hochtemperatureinrichtungen, zusätzlich Lagen aus Filz oder Folien enthalten, werden bevorzugt Wandstärken im Bereich von 30 bis 80 mm verwendet.

Je nach Verwendungszweck der hergestellten Bauteile können zusätzlich zu der oder den gewickelten Schicht(en) aus Gewebe oder Gewebeprepregs und der oder den Schicht(en) aus Fäden, Garnen, Rovings oder Bändern auch eine oder mehrere Lagen eines Filzes in das Bauteil eingefügt werden. Als Material für diese Filze eignen sich zum einen Carbonfaserfilze oder Graphitfaserfilze, die aus Cellulosefaserfilzen oder aus Polyacrylnitrilfaserfilzen durch Carbonisieren oder durch Carbonisieren und Graphitieren hergestellt worden sind. Eine hier verwendbare, andere Art von Carbon- oder Graphitfaserfilzen ist aus carbonisierten oder graphitierten Pechfasern durch Vernadeln zu Filzen oder durch Graphitieren eines aus carbonisierten Pechfasern hergestellten Filzes hergestellt worden. Es können aber auch keramische Filze wie beispielsweise Filze aus Aluminiumoxidfasern, Basaltfasern oder Steinwolle oder Filze auf der Basis von Cellulose- oder von Polyacrylnitrilfasern verwendet werden. Wenn es bei einem abwickelbaren und Filzlagen enthaltenden Bauteil besonders auf ein gutes thermisches Isoliervermögen ankommt, werden vorzugsweise Graphitfilze verwendet, die aus Cellulosefilzen hergestellt worden sind. Es ist zu erkennen, dass eine Vielzahl von unterschiedlichen Filzen mit unterschiedlichen Eigenschaften verwendet werden kann, wobei die Verwendung eines bestimmten Filzmaterials von dem Verwendungszweck des Bauteils, vorzugsweise von den an es gestellten Temperaturanforderungen abhängt. Die Wahl der Dicke einer Filzlage oder mehrerer Filzlagen hängt neben den technischen Erfordernissen, die sich aus dem vorgesehenen Verwendungszweck ergeben, auch von den Endabmessungen des herzustellenden Bauteils ab. In der Regel liegt die Dicke einer Filzlage nach dem Aufwickeln im Bereich von 2 bis 20 mm, vorzugsweise im Bereich 5 bis 10 mm. Dicken von bis zu 20 mm werden bevorzugt verwendet, wenn Bauteile mit größeren Wandstärken hergestellt werden sollen.

Anstelle von Filz oder auch zusätzlich zu der bzw. den Filzlagen kann das erfindungsgemäße abwickelbare Bauteil auch eine oder mehrere Lagen Folie enthalten, die ebenfalls aufgewickelt wird/werden. Besonders geeignet ist hier eine Graphitfolie, die hochtemperaturbeständig, chemisch beständig sowie gas- und flüssigkeitsdicht ist und die einer Graphitierungsbehandlung ohne Änderung ihrer Eigenschaften standhält. Es können aber auch Metallfolien z.B. auf Molybdän- oder Kupferbasis eingesetzt werden, wenn dies der Anwendungszweck erfordert. Wichtig ist, dass das jeweils verwendete Folienmaterial an die thermischen und chemischen Bedingungen angepasst ist, denen das Bauteil während des Herstellungsprozesses und der vorgesehenen Anwendung ausgesetzt werden soll. Unter Verwenden von Folien können z.B. abwickelbare Bauteile wie Rohre oder Zylinder hergestellt werden, die gas- und flüssigkeitsdicht sind, eine ausgezeichnete chemische Beständigkeit gegenüber nicht oxidierenden bis wenig oxidierenden Medien aufweisen und ein gutes thermisches Isolationsvermögen auch noch im Temperaturbereich von über 2000°C haben. Derartige Bauteile werden in der Raumfahrt-, Hochtemperatur- und Halbleitertechnik verwendet. Die Dicke der Folie wird ebenfalls gemäß den Herstellungs- und Anwendungserfordernissen des abwickelbaren Bauteils ausgewählt. Üblicherweise wird eine Folie mit einer Dicke von 0,2 bis 1 mm eingesetzt, wobei eine Folienstärke von etwa 0,5 mm bevorzugt wird. In Sonderfällen oder bei großen Durchmessern der Bauteile ist es selbstverständlich auch möglich, Folien mit einer Dicke von mehr als 1 mm zu verwenden.

Die Dicke einer Gewebeprepreglage kann im Bereich von 0,20 bis 2,00 mm liegen, bevorzugt wird eine Dicke von etwa 0,5 bis 1,0 mm gewählt. Wird ein sehr feines Gewebe verwendet, kann es günstig sein, mehrere Gewebeprepreglagen übereinander zu laminieren, wobei bevorzugt drei oder vier Lagen übereinander gelegt werden. Eine solche Mehrzahl von Gewebelagen kann insgesamt z.B. ca. 2 mm dick sein. Werden mehrere Lagen Gewebeprepreg übereinander angeordnet, müssen diese Lagen nicht die gleiche Dicke aufweisen. Entsprechendes gilt für Wickellagen aus Fäden, Garnen, Rovings, Bändern, sowie aus Filzen oder Folien.

Das Verhältnis von Gewebe oder Gewebeprepreglagen zu den Lagen aus Fäden, Garnen, Rovings oder Bändern liegt bevorzugt im Bereich von 1:1 bis 4:1. Je nach Durchmesser oder Wandstärke des zu erzeugenden abwickelbaren Bauteils kann auch eine größere Anzahl von Lagen vorgesehen werden.

Der Winkel beim Aufwickeln der Fäden, Garne, Rovings oder Bänder liegt in Bezug auf die Wickelachse, d.h., die Längsachse des abwickelbaren Bauteils, bevorzugt im Bereich von ± 20 bis ± 90°. Es kann für jede Lage aus Fäden, Garnen, Rovings oder Bändern ein unterschiedlicher Wickelwinkel eingestellt werden. Durch geeignete Wahl der Wickelwinkel können insbesondere die mechanischen und bestimmte elektrische Eigenschaften des abwickelbaren Bauteils beeinflusst werden. Dementsprechend hängt die Wahl des Wickelwinkels von den Eigenschaften des Bauteils ab, das hergestellt werden soll. Wickelwinkel im Bereich von ± 20° werden eingestellt, wenn das Bauteil insbesondere Biegebeanspruchungen standhalten muß. Wickelwinkel im Bereich von ± 80° bis ± 90° bewirken, dass das hergestellte Bauteil starke Drücke von innen aufnehmen kann. Dies ist insbesondere bei der Verwendung als Heißpressmatrizen wichtig. Das Bewickeln unter Winkeln von 70 bis 90° kann ohne einen Stiftkranz geschehen. Bei Wickelwinkeln von weniger als 70° müssen jedoch Stiftkränze, die die Fäden, Garne, Rovings oder Bänder am Abgleiten oder Verschieben hindern, verwendet werden.

Die Geschwindigkeit beim Aufwickeln der Lagen liegt bevorzugt im Bereich von etwa 20 bis 200 m/min. Die Wahl der angewendeten Geschwindigkeit richtet sich in erster Linie nach dem Durchmesser des herzustellenden Bauteils. Grundsätzlich gilt, dass die Geschwindigkeit bevorzugt um so langsamer eingestellt wird, je größer der Durchmesser des Bauteils ist.

Im Folgenden wird die Erfindung durch einige ausgewählte Beispiele weiter erläutert:

### Beispiel 1:

Für den Aufbau des abwickelbaren Bauteils wurde ein phenolharzhaltiges Gewebeprepreg, dessen Gewebe in Köperbindung aus einem Graphitfaserroving hergestellt worden war, der aus 6000 Einzelfilamenten bestand, verwendet. Das Flächengewicht des Gewebes betrug 420 g/m².

Zum Überwickeln der Gewebeprepreglagen wurde ein Roving verwendet, der aus 24000 Hochmodulgraphiteinzelfilamenten bestand. Die Einzelfilamente hatten eine Dichte von 1,8 g/cm³ (gemessen nach DIN 65569) und eine Zugfestigkeit von etwa 2.400 MPa (gemessen in Anlehnung an DIN ENV 1007-4). Die Bruchdehnung dieser Fasern liegt im Bereich von 0,6 bis 1,0% (gemessen in Anlehnung an DIN ENV 1007-4). Diese Gewebeprepregs und Rovings wurden auf einer Wickelmaschine auf einen Dorn von 200 mm Durchmesser, dessen Oberfläche vorher mit einem Trennmittel versehen worden war, mit der folgenden Abfolge von Lagen und mit den folgenden Fadenspannungen des Rovings aufgewickelt:

| | | |
|---|---|---|
| 1. Lage | Prepreg | Schichtdicke 0,6 mm |
| 2. Lage | Roving (Zugspannung 70 N) | Schichtdicke 1,2 mm |
| 3. Lage | Prepreg | Schichtdicke 0,6 mm |
| 4. Lage | Roving (Zugspannung 80 N) | Schichtdicke 1,3 mm |
| 5. Lage | Prepreg | Schichtdicke 0,6 mm |
| 6. Lage | Roving (Zugspannung 90 N) | Schichtdicke 1,2 mm |

Der Wickelwinkel des Rovings betrug bei jeder Lage ± 80° zur Längsachse des Bauteils, d.h., es wurde eine Lage Roving unter einem Winkel von +80° und darüber eine Lage Roving unter einem Winkel von -80° gewickelt. Der auf dem Wickeldorn befindliche Wickelkörper wurde sodann aus der Wickelmaschine entnommen und in einem Härteofen bei 190°C ausgehärtet, wobei eine Aufheizzeit von 4 Stunden und eine Haltezeit von 2 Stunden angewandt wurde. Nach dem Abkühlen des ausgehärteten Bauteils wurde der Wickeldorn gezogen, d.h., entfernt und das Bauteil auf eine vorbestimmte Länge vorbearbeitet. Danach wurde es in nicht oxidierender Atmosphäre im Verlaufe einer Woche carbonisiert, wobei eine Endtemperatur von 950°C und eine Haltezeit von 24 Stunden angewandt wurde. Das carbonisierte Bauteil wurde sodann unter Anwenden des Vakuum-Druck-Verfahrens unter Anwenden eines Imprägnierdruckes von 6 bar einmal mit Pech imprägniert und danach wie vorher bereits beschrieben, nochmals carbonisiert. Das nachverdichtete und carbonisierte Bauteil wurde danach unter nicht oxidierenden Bedingungen bei einer Temperatur von 2000°C graphitiert. Nach dem Abkühlen und Ausbauen aus dem Graphitierungsofen wurde das Bauteil durch Fräsen und Drehen zu einem zylinderförmigen Heizelement mit mäanderförmigen Einschnitten für einen Hochtemperaturschutzgasofen bearbeitet.

### Beispiel 2

Das im folgenden beschriebene Bauteil war für das Verwenden als Isolations- und Schutzzylinder in einem Hochtemperaturschutzgasofen vorgesehen.

Für den Aufbau dieses abwickelbaren rohrförmigen Bauteils, das einen Innendurchmesser von 600 mm, eine Wandstärke von 40 mm und eine Länge von 800 mm erhalten sollte, wurde ein bezüglich der Bindung (Köper) und der Fasergrundlage (Graphitfaser) gleiches phenolharzhaltiges Gewebeprepreg wie unter Beispiel 1 verwendet. Im Unterschied dazu bestand in diesem Beispiel das Gewebe jedoch aus Rovings aus 12.000 Filamenten und es hatte eine Dicke von nur 0,5 mm und ein Flächengewicht von 440 g/m². Der zum Überwickeln verwendete Roving bestand aus 12.000 Hochmodulgraphiteinzelfilamenten, die eine Dichte von ca. 1,83 g/cm³ (nach DIN 65569) und, bezogen auf das Einzelfilament, eine Zugfestigkeit von ca. 3.000 MPa (in Anlehnung an DIN ENV 1007-4) aufwies. Zusätzlich wurden hier noch Lagen von Graphitfolie und von Graphitfilz aufgewickelt. Die Graphitfolie hatte eine Dicke von 0,5 mm, eine scheinbare Dichte in Anlehnung an DIN ISO 536 von 1,0 g/cm³ und ein Flächengewicht von 1000 g/m². Zum besseren Verbinden der Folienlagen mit den auf sie folgenden Prepreglagen wurde die Kontaktseite der Graphitfolien vor dem Aufwickeln der folgenden Prepreglagen mit einem Klebeharz eingestrichen. Der Graphitfilz war aus einem aus Cellulosefasern bestehenden Filz durch Carbonisieren und Graphitieren hergestellt worden. Er hatte eine Dicke von 10 mm und ein Flächengewicht nach DIN 53854 von ca. 1000 g/m². Diese Gewebeprepregs, Rovings, Graphitfolien und Graphitfilze wurden auf einer Wickelmaschine auf einen Dorn von 600 mm Durchmesser, dessen Oberfläche vorher mit einem Trennmittel versehen worden war, mit der folgenden Abfolge von Lagen und mit den folgenden Fadenspannungen des Rovings aufgewickelt:

| | |
|---|---|
| 1. Abfolge von Lagen | Vier Schichten Prepreg, Gesamtschichtdicke 2 mm. |
| 2. Lage | Eine Doppelschicht Roving, 0,5 mm Dicke, Fadenspannung 100 N, Wickelwinkel 1. Schicht +80°, 2. Schicht -80°. |
| 3. Lage | Eine Schicht Graphitfolie, Schichtdicke 0,5 mm. |
| 4. Lage | Eine Schicht Graphitfilz, Schichtdicke 10 mm. |
| 5. Lage | Eine Schicht Graphitfolie, Schichtdicke 0,5 mm. |
| 6. Lage | Eine Schicht Prepreg, Schichtdicke 0,5 mm. |
| 7. Lage | Eine Doppelschicht Roving, 0,5 mm Dicke, Fadenspannung 100 N, Wickelwinkel 1. Schicht +80°, 2. Schicht -80°. |
| 8. Lage | Eine Schicht Graphitfilz, Schichtdicke 10 mm. |
| 9. Lage | Eine Schicht Graphitfolie, Schichtdicke 0,5 mm. |
| 10. Lage | Eine Schicht Prepreg, Schichtdicke 0,5 mm. |
| 11. Lage | Eine Doppelschicht Roving, 0,5 mm Dicke, Fadenspannung 120 N, Wickelwinkel 1. Schicht +80°, 2. Schicht -80°. |
| 12. Lage | Eine Schicht Graphitfilz, Schichtdicke 10 mm. |
| 13. Lage | Eine Schicht Graphitfolie, Schichtdicke 0,5 mm. |
| 14. Lage | Eine Schicht Prepreg, Schichtdicke 0,5 mm. |
| 15. Lage | Vier Doppelschichten Roving, Schichtdicke insgesamt 2,0 mm, Fadenspannung 130 N, Wickelwinkel ± 80°. |

Das aus den oben genannten Lagen bestehende Bauteil hatte nach dem Wickeln eine Gesamtdicke von 40 mm. Der auf dem Wickeldorn befindliche Wickelkörper wurde aus der Wickelmaschine entnommen und wie unter Beispiel 1 beschrieben, ausgehärtet, carbonisiert und graphitiert. Im Gegensatz zur Verfahrensweise nach Beispiel 1 wurde das Bauteil jedoch nicht im carbonisierten Zustand nachverdichtet. Das graphitierte Bauteil wurde sodann auf die vorgegebene Länge bearbeitet und mit Bohrungen für Mess- und Manipulationseinrichtungen versehen. Die eingebauten Lagen aus Filz verleihen dem Bauteil ausgezeichnete thermische Isolationseigenschaften. In einem Testlauf herrschte im Inneren des Zylinders eine Temperatur von 1600°C und außerhalb dessen eine Temperatur von nur mehr 400°C. Zusätzlich wirkte der Zylinder durch die eingebauten Lagen aus Graphitfolien als Dampf- und Gassperre.

### Beispiel 3:

Für den Aufbau des abwickelbaren Bauteils wurde ein phenolharzhaltiges Gewebeprepreg, dessen Gewebe in Köperbindung aus einem Graphitfaserroving hergestellt worden war, der aus 6.000 Einzelfilamenten bestand, verwendet. Das Flächengewicht des Gewebes betrug 420 g/m². Der verwendete Roving bestand aus 12.000 Hochmodulgraphiteinzelfilamenten, die eine Dichte von ca. 1,83 g/cm³ (nach DIN 65569) und, bezogen auf das Einzelfilament, eine Zugfestigkeit von ca. 3000 MPa (in Anlehnung an DIN ENV 1007-4) aufwiesen. Die Bruchdehnung dieser Fasern liegt im Bereich von 0,6 bis 1,0% (gemessen in Anlehnung an DIN ENV 1007-4). Diese Gewebeprepregs und Rovings wurden auf einer Wickelmaschine auf einen Dorn von 1145 mm Durchmesser, dessen Oberfläche vorher mit einem Trennmittel versehen worden war, mit der folgenden Abfolge von Lagen und mit den folgenden Fadenspannungen des Rovings aufgewickelt:

| | |
|---|---|
| 1. Lage | Drei Schichten Gewebeprepreg, Gesamtschichtdicke von 1,5 mm. |
| 2. Lage | Eine Doppelschicht Roving, Wickelwinkel +80° und -80°, Fadenspannung 90 N pro Roving, Schichtdicke 1,3 mm. |
| 3. Lage | Drei Schichten Gewebeprepreg, Gesamtschichtdicke 3,5 mm. |
| 4. Lage | Eine Einfachschicht Roving, Wickelwinkel +80°, Fadenspannung 180 N, Schichtdicke 0,7 mm. |

Der auf dem Wickeldorn befindliche Wickelkörper wurde aus der Wickelmaschine entnommen und wie unter Beispiel 1 beschrieben, ausgehärtet, carbonisiert und graphitiert. Im Gegensatz zur Verfahrensweise nach Beispiel 1 wurde das Bauteil jedoch nicht im carbonisierten Zustand nachverdichtet. Das hergestellte abwickelbare Bauteil hatte einen Außendurchmesser von 1150 mm einen Innendurchmesser von 1140 mm und eine Länge von 850 mm. Es sollte als Hitzeschild in einem Ofen zum Herstellen von Halbleitern verwendet werden.

### Beispiel 4:

Bei diesem Ausführungsbeispiel wurde auf einer üblichen Wickeleinrichtung, die auf beiden Seiten des Dorns je einen Stiftkranz zum Halten und Positionieren des Rovings, der aufgewickelt werden sollte, hatte, ein Rohling für ein abwickelbares Bauteil hergestellt, das unter anderem Rovinglagen mit einem Wickelwinkel von 20° enthielt. Auf einen Dorn mit einem Durchmesser von 210 mm wurde als erste Lage ein Prepreg aus einem Gewebe in Köperbindung 2/2 aus Graphitfaserrovings (3000 Filamente pro Roving) mit einem Flächengewicht von 225 g/m², das mit einem Phenolharz vom Resoltyp imprägniert worden war, (Flächengewicht des Prepregs, 433 g/m²) mit einer Schichtdicke von 0,3 mm aufgewickelt. Diese erste Schicht wurde sodann mit einer Fadenspannung von 70 N unter Verwenden von Wickelwinkeln von zum einen +20° und zum zweiten -20° mit einem Roving überwickelt. Die Dicke dieser zweiten Wickellage, die aus zwei Schichten Rovings bestand, betrug 1,2 mm. Der verwendete Roving bestand aus 24000 Graphitfilamenten. Die Filamente des Rovings hatten eine Rohdichte von 1,8 g/cm³ (nach DIN 65569), eine Zugfestigkeit (in Anlehnung an DIN ENV 1007-4) von 2400 Mpa und eine Bruchdehnung (in Anlehnung an DIN ENV 1007-4) von 0,6 bis 1,0 %. Über diese zweite Lage wurde eine dritte, 0,3 mm dicke Lage des gleichen Prepregs wie es für die erste Wickellage verwendet worden war, gewickelt. Auf diese dritte Lage folgte eine vierte, 1,2 mm dicke Lage aus einem Roving wie es für die zweite Lage verwendet worden war. Auch diese Lage bestand wie die zweite Lage aus zwei Schichten eines Rovings, der mit einem Wickelwinkel von einmal +20° und zum anderen -20° gewickelt worden war. Im Unterschied zu dieser zweiten Lage betrug die Fadenspannnung beim Wickeln hier 80 N. Als fünfte Lage folgte dann eine Lage Prepreg mit einer Dicke von 0,3 mm, die in Material und Aufbau der Prepreglage der ersten und dritten Lage entsprach. Den äußeren Abschluß bildete eine sechste Lage aus einem Roving, die als Doppellage unter Wickelwinkeln von plus und minus 80° unter einer Fadenspannung von 90 N gewickelt wurde. Es wurde hierzu der gleiche Roving verwendet, der auch für die vorhergehenden Lagen zwei und vier eingesetzt worden war. Nach dem Wickelvorgang wurde der Wickelkörper gehärtet, sodann vom Wickeldorn abgezogen, danach bei 900°C carbonisiert und nachfolgend bei 2000°C graphitiert. Das so hergestellte abwickelbare Bauteil diente als hoch biegesteife Tragerolle in einem Hochtemperaturschutzgasofen.

Im folgenden wird die Erfindung beispielhaft anhand von lediglich schematisch dargestellten Figuren weiter beschrieben:

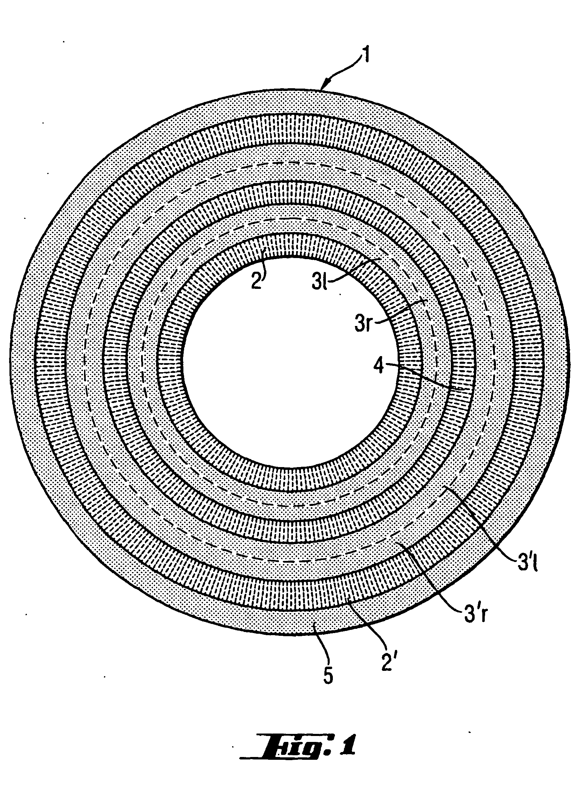

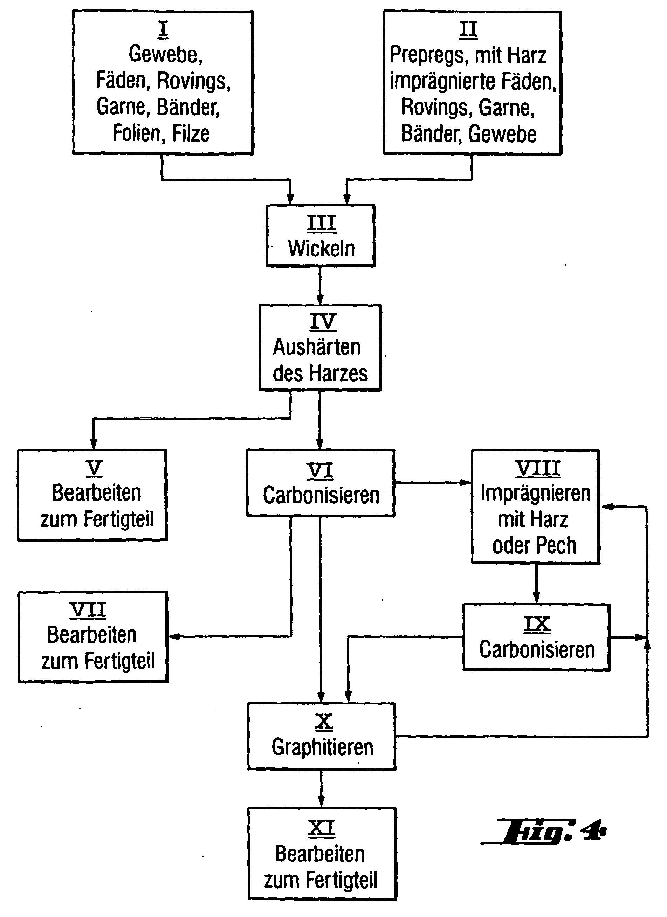

Die Figuren 1, 2 und 3 zeigen Ansichten des Aufbaues von erfindungsgemäßen, abwickelbaren Bauteilen aus Lagen aufgewickelter Materialien im Querschnitt senkrecht zur Längsachse der Bauteile. Figur 4 gibt anhand eines Fließbildes die Möglichkeiten von Verfahrensgängen wieder, nach denen erfindungsgemäße, abwickelbare Bauteile hergestellt werden können.

In Figur 1 ist ein Bauteil 1 aus mit Graphitfasern verstärktem Kohlenstoff wiedergegeben, das auf Innendruckbelastung ausgelegt ist. Beim Herstellen des Bauteils 1 wurde die innerste Schicht 2 aus einem mit Phenolharz enthaltenden Prepreg bewickelt, dessen Basisgewebe eine Köperbindung aufwies und das aus Rovings aus Hochmodulgraphitfilamenten hergestellt worden war.

Dabei wurde so gewickelt, dass die Kettfäden des Gewebes senkrecht zur Längsachse des Bauteils ausgerichtet waren. Die zweite Schicht 3l; 3r besteht aus zwei Lagen 3l und 3r. Sie bestand beim Wickeln aus einem Phenolharz enthaltenden Roving aus Hochmodulgraphitfilamenten, der einmal mit einer Neigung von -85° 3l und einmal mit einer Neigung von +85° 3r, bezogen auf die Bauteillängsachse aufgewickelt worden war. Dann folgte eine dritte Schicht 4 aus einem mit einem Phenolharz imprägnierten Prepreg, dessen Basisgewebe aus Rovings aus Hochmodulgraphitfilamenten hergestellt worden war, das in Leinenbindung gewebt worden war. Auf diese Schicht 4 folgte sodann als vierte Schicht wieder eine Doppellage 3'l; 3'r, die wie die zweite Schicht 3l; 3r aufgebaut, die aber mit einer größeren Fadenspannung als diese gewickelt worden war. Anschließend an diese vierte Schicht war als fünfte Schicht 2' eine Lage aus einem Prepreg gewickelt worden, das dem Prepreg 2 in der ersten Schicht in Aufbau und Orientierung entsprach. Als äußerste, sechste Schicht 5 war mit einem Wickelwinkel von 90°, bezogen auf die Bauteillängsachse ein Phenolharz enthaltendes Band aus 5 Rovings aus Hochmodulgraphitfilamenten mit einer Fadenspannung aufgewickelt worden, die größer als diejenige war, mit denen der Roving 3l; 3r der vierten Schicht aufgewickelt worden war. Der Wickelkörper wurde einer Härtungsbehandlung unterworfen und nach dem Ziehen des Wickeldornes carbonisiert.

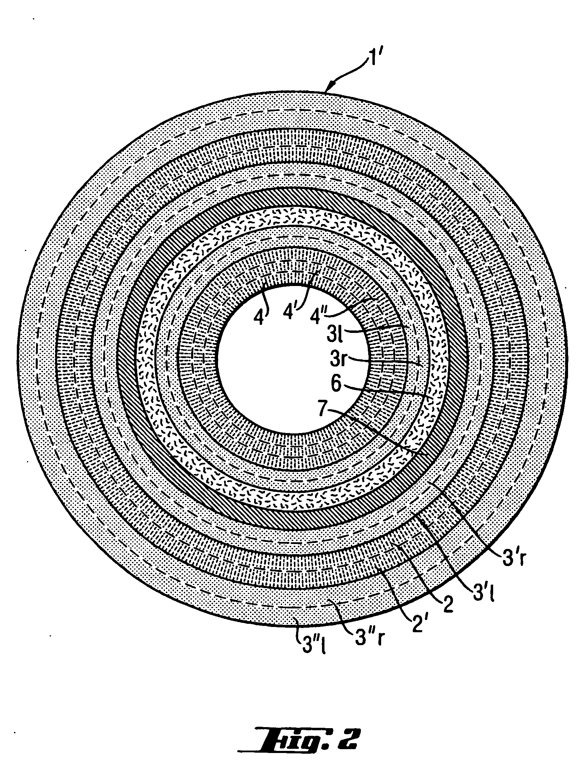

In Figur 2 ist ein abwickelbares Bauteil 1' dargestellt, das als thermischer Isolierzylinder mit Dampf- bzw. Gassperre in einem Hochtemperaturschutzgasofen eingesetzt werden sollte. Im Folgenden wird beschrieben, womit und wie die einzelnen Schichten beim Herstellen vor dem Aushärten der Harzkomponenten aufgebaut worden sind. Nach dem Aushärten wurde das Bauteil noch carbonisiert und graphitiert. Die erste Schicht bestand aus drei Lagen 4; 4'; 4'' eines aus Graphitfasern bestehenden, mit einem Epoxidharz imprägnierten Leinengewebes. Darauf waren als zweite Schicht 3l; 3r zwei Lagen 3l und 3r eines Epoxidharz enthaltenden graphitierten Garns aus Kohlenstoffstapelfasern mit einer Fadenspannung von 40 N im Winkel von -80° 3l und von +80° 3r gewickelt worden. Die dritte Schicht 6 bestand aus einem graphitierten Cellulosefilz mit einer Dicke von 8 mm, der nicht mit Harz imprägniert worden war. Auf diese dritte Schicht 6 folgte eine vierte Schicht 7 aus einem 0,2 mm starken Blech aus Molybdän 7, dessen Enden sich an der Stoßstelle der Blechbahn ein wenig überlappten. Die darüber befindliche fünfte Schicht 3'r; 3'l bestand aus zwei Lagen 3'r und 3'l aus einem phenolharzhaltigen Roving aus Graphitfilamenten, der einmal unter einem Wickelwinkel von +80° 3'r und zum anderen unter einem Wickelwinkel von -80° 3'l, bezogen auf die Bauteillängsachse mit einer Fadenspannung von 120 N aufgebracht worden war. Als sechste Schicht 2; 2' folgte eine Doppellage 2; 2' aus einem phenolharzhaltigen Prepreg, dessen textile Basis ein Gewebe aus einem Graphitgarn in Köperbindung war. Die äußere, siebte Schicht 3''r; 3''l bestand aus zwei einmal unter einem Winkel von +80° 3''r und zum anderen unter einem Winkel von -80° 3''l gewickelten, mit einem Phenolharz imprägnierten Roving aus Graphitfilamenten, die mit einer Fadenspannung von 150 N aufgewickelt worden waren.

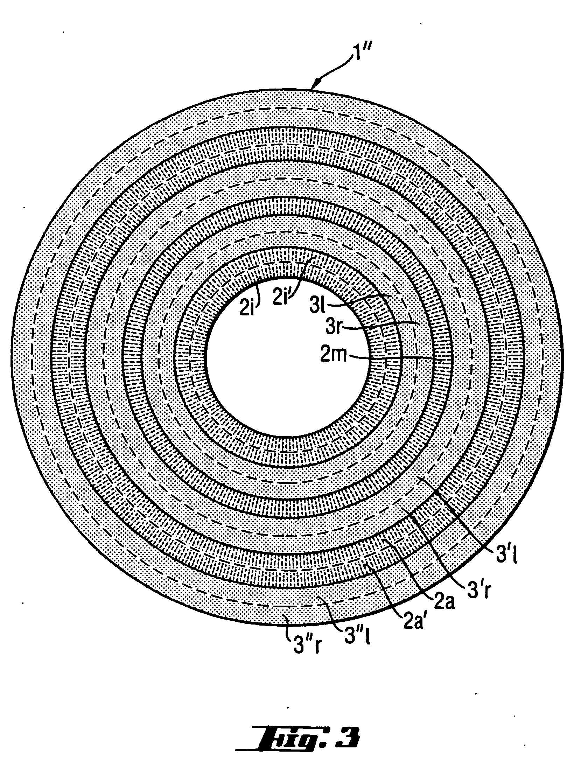

Figur 3, zeigt ein abwickelbares Bauteil 1'', das auf Biegebeanspruchung ausgelegt worden ist, nach dem Wickeln im nicht ausgehärteten Zustand. Ein solches Bauteil wäre nach dem Aushärten und dem Endbearbeiten in Form einer Walze oder Rolle aus mit Kohlenstoffasern verstärktem Kunststoff für den Transport oder das Weiterverarbeiten von Endlosbahnen wie Folien, Papier oder Textilien bei üblichen Raumtemperaturen verwendbar. Nach einer anderen Variante einer Verwendung hätte es nach dem Aushärten des im Basiskörper enthaltenen Harzes noch carbonisiert und graphitiert werden können. Die innere Schicht 2i; 2i' besteht aus zwei Lagen 2i und 2i' aus einem phenolharzhaltigen Gewebeprepreg auf Basis eines Köpergewebes aus Rovings aus Hochmodulgraphitfilamenten. Das Aufwickeln wurde so vorgenommen, dass die Kettfäden des Gewebes parallel zur Längsachse des Wickelkörpers ausgerichtet waren. Die zweite Schicht 3l; 3r bestand aus zwei Lagen Rovings 3l und 3r aus mit Phenolharz imprägnierten Hochmodulgraphitfilamenten, die unter Verwenden von zwei Stiftkränzen unter einer Fadenspannung von 30 N einmal unter einem Winkel von -20° 3l und zum anderen unter einem Winkel von +20° 3r, bezogen auf die Längsachse des Bauteils, aufgewickelt worden waren. Die folgende dritte Schicht 2m bestand aus einer Lage aus einem phenolharzhaltigen Prepreg, das im Aufbau und in der Ausrichtung dem Prepreg entsprach, der für die erste Schicht 2i; 2i' verwendet worden war. Die vierte Schicht 3'l; 3'r bestand aus zwei Lagen 3'l und 3'r aus einem Roving, das in Aufbau und Vorbehandlung dem für die zweite Schicht (3l; 3r) verwendeten Roving entsprach. Im Unterschied zu diesem wurde der Roving hier aber unter einem Wickelwinkel von -75° 3'l und von +75° 3'r unter einer Fadenspannung von 140 N aufgewickelt. Die darauf folgende fünfte Schicht 2a; 2a' bestand aus zwei Lagen 2a und 2a' aus Gewebeprepreg, die in Aufbau und Ausrichtung dem Gewebeprepreg entsprachen, das in der ersten 2i; 2i' und in der dritten Schicht 2m eingesetzt worden war. Die äußere, sechste Schicht 3''l; 3''r, die auch aus zwei Lagen 3''l und 3''r besteht, wurde wieder von einem phenolharzhaltigen Roving aus Hochmodulgraphitfilamenten gebildet, der aber einmal unter einem Winkel von -85° 3''l und zum anderen unter einem Winkel von +85° 3''r zur Bauteillängsachse gewickelt worden war.

Die aus Figur 4 entnehmbaren Verfahrensschritte können auf bekannten Einrichtungen des Standes der Technik durchgeführt werden. Ihre genauere Beschreibung erübrigt sich deshalb an dieser Stelle. Das Blockschema zeigt zwei Vorratsbehälter I und II. Behälter I enthält harzfreie Ausgangsmaterialien wie Gewebe, Fäden, Garne, Rovings, Bänder sowie Filze oder Folien. Behälter II enthält harzhaltige Ausgangsmaterialien wie Gewebe, Fäden, Garne, Rovings, Bänder sowie Filze oder Folien. Zum Herstellen abwickelbarer Bauteile werden entweder von Harz freie Gewebe aus dem Vorrat I auf der Wickelanlage III auf einen temporären Dorn gewickelt und dann mit Harz imprägnierten Fäden, Garnen, Rovings oder Bändern aus dem Vorrat II umwickelt. Es können auch Prepregs aus dem Vorrat II auf den Dorn gewickelt und dann mit harzfreien Fäden, Garnen, Rovings oder Bändern aus dem Vorrat I umwickelt werden. Derartige Wickelkörper werden manchmal, was nicht dargestellt ist, nach dem Wickeln mit einem Harz imprägniert. Vorzugsweise werden jedoch Prepregs und mit Harz imprägnierte Fäden, Garne, Rovings oder Bänder aus dem Vorrat II auf einer Wickeleinrichtung III zu einem Vorproduktkörper verarbeitet. Sollen zusätzlich Folien oder Filze in den Wickelkörper integriert werden, sind diese in der Regel aber nicht ausschließlich harzfrei und stammen aus dem Vorrat I. Bei manchen Anwendungen werden beim Wickeln III insbesondere die Folien auf mindestens einer der flachen Oberflächen mit einer Haftschicht aus Harz versehen. Die unterschiedlichen Möglichkeiten, nach denen die verschiedenen Rohstoffe aus den Vorräten I und II beim Aufwickeln kombiniert und angeordnet werden können, sind in der Erfindungsbeschreibung, auf die hier verwiesen wird, dargelegt worden. Die nach dem Wickelprozess III erhaltenen Wickelkörper kommen dann in eine Vorrichtung IV, in der der in ihnen befindliche Harzanteil ausgehärtet wird. Nach einer Variante können die so erhaltenen, mit Fasermaterialien verstärkten Kunststoffkörper in Anlagen zum mechanischen Bearbeiten und zum Weiterveredeln V zu Fertigteilen weiterverarbeitet werden. Nach einer anderen Variante werden die vom Wickelkern befreiten, ausgehärtetes Harz enthaltenden, abwickelbaren Bauteile einer Anlage VI zugeführt, in der alle ihre carbonisierbaren Bestandteile in Kohlenstoff umgewandelt werden. Nach einer Möglichkeit werden die so erhaltenen Kohlenstoffkörper auf Anlagen zum mechanischen Bearbeiten und zum Weiterveredeln VII zu Fertigteilen weiterverarbeitet. Nach einer zweiten Möglichkeit werden die Körper, die nach dem Pyrolyseprozess des Carbonisierens flüssigkeitszugängliche Poren haben, in einer Imprägnieranlage VIII mit einem geeigneten flüssigen, Kohlenstoff enthaltenden Mittel imprägniert und es wird der imprägnierte Körper zum Carbonisieren des infiltrierten Kohlenstoffträgers in einer Carbonisierungsanlage nochmals carbonisiert. Dieser, Nachverdichten genannte Prozess, der eine Verbesserung des Eigenschaftsprofils des Bauteils bewirkt, kann auch mehr als einmal durchgeführt werden. Solche nachverdichteten VIII + IX, lediglich carbonisierten Bauteile können auch, was nicht dargestellt ist, in Anlagen VII zu Fertigteilen weiterverarbeitet werden. Bevorzugt werden sie jedoch in Anlage X einer Graphitierungsbehandlung unterworfen. In diese Anlage X gelangen auch die carbonisierten Bauteile aus Anlage VI, die weder direkt zu Fertigteilen verarbeitet VII, noch nachverdichtet VIII + IX werden sollten. So erhaltene graphitierte Bauteile können, was nur dann geschieht, wenn es die Anforderungen und der Aufwand gerechtfertigt erscheinen lassen, nochmals nachverdichtet VIII + IX und dann einer der möglichen Weiterverarbeitungsschritte (VII, nicht dargestellt oder X) zugeführt werden. Vorzugsweise werden die Bauteile jedoch nach dem Graphitieren in Anlagen XI zu Fertigteilen weiterverarbeitet.

### Bezugszeichenliste

- 1; 1'; 1'': abwickelbares Bauteil
- 2; 2': Prepreg aus Gewebe mit Köperbindung
- 2i; 2i'; 2m; 2a; 2a': Prepreg aus Gewebe mit Köperbindung (Fig. 3)
- 3l; 3'l; 3''l;: Faden, Garn, Roving, Band, Wickelwinkel nach links geneigt
- 3r; 3'r; 3''r;: Faden, Garn, Roving, Band, Wickelwinkel nach rechts geneigt
- 4; 4'; 4'': Prepreg aus Gewebe mit Leinenbindung
- 5: Band aus Rovings
- 6: Filz
- 7: Folie, Graphitfolie, Metallfolie
- I: Vorrat, von Harz freies Material
- II: Vorrat, Harz enthaltendes Material
- III: Wickelvorrichtung, Wickeln
- IV: Vorrichtung zum Härten des Harzes, Aushärten des Harzes
- V: Anlagen für das Weiterverarbeiten zu Fertigteilen nach IV
- VI: Anlage zum Carbonisieren, Carbonisieren, nach IV
- VII: Anlagen für das Weiterverarbeiten zu Fertigteilen nach VI oder IX
- VIII: Anlage zum Imprägnieren mit flüssigem Kohlenstoffträger, Imprägnieren, nach VI oder X
- IX: Anlage zum Carbonisieren, Carbonisieren, nach VIII
- X: Anlage zum Graphitieren, Graphitieren, nach VI oder IX
- XI: Anlagen für das Weiterverarbeiten zu Fertigteilen nach X

## Patentansprüche

1. Verfahren zum Herstellen von Bauteilen (1) aus Faserverbundwerkstoffen durch Aufwickeln von mindestens einer Lage aus einem Gewebe (2; 4) und mindestens zwei Lagen aus Fäden (3), Garnen (3), Rovings (3) oder Bändern (3) wobei zumindest das Gewebe (2; 4) oder zumindest die Fäden, Garne, Rovings oder Bänder (3) mit einem noch nicht ausgehärteten Harz imprägniert sind, auf einen formgebenden, temporären Dorn, so dass die Außenschicht des Bauteils aus einer Lage gewickelter Fäden, Garnen, Rovings oder Bändern (3) besteht, und Aushärten des erhaltenen Bauteils (1) nach dem Wickelprozess
**dadurch gekennzeichnet, dass**
jede Lage aus Fäden, Garnen, Rovings oder Bändern (3) mit einer im Vergleich zur vorigen Lage aus Fäden, Garnen, Rovings oder Bändern (3) mindestens gleich großen Fadenspannung gewickelt wird.

2. Verfahren nach Patentanspruch 1,
**dadurch gekennzeichnet, dass**
das Bauteil (1) aus zwei oder mehr Lagen aus Gewebe (2; 4) und zwei oder mehr Lagen aus Fäden, Garnen, Rovings oder Bändern (3) hergestellt wird und dass jede Lage aus Fäden, Garnen, Rovings oder Bändern (3) mit einer im Vergleich zur vorigen Lage aus Fäden, Garnen, Rovings oder Bändern (3) größeren Fadenspannung gewickelt wird.

3. Verfahren nach einem der Patentansprüche 1 bis 3, **dadurch gekennzeichnet, dass** sowohl die Gewebe (2, 4) als auch die Fäden (3), Garne (3), Rovings (3) oder Bänder (3) mit einem Harz getränkt sind, das noch nicht ausgehärtet ist.

4. Verfahren nach Patentanspruch 1 oder 2, **dadurch gekennzeichnet, dass** das erhaltene Bauteil (1) nach dem Härten einer der folgenden Behandlungen unterzogen wird:
Carbonisieren
Carbonisieren und anschließendes Nachverdichten
Carbonisieren und anschließendes Graphitieren
Carbonisieren, Graphitieren und anschließendes Nachverdichten.

5. Verfahren nach einem der Patentansprüche 1 bis 4,
**dadurch gekennzeichnet, dass**
beim Wickeln zusätzlich eine oder mehrere Lagen Filz (6) aufgebracht werden.

6. Verfahren nach Patentanspruch 5,
**dadurch gekennzeichnet, dass**
mindestens ein Filz (6) aus der Gruppe Filz aus Kohlenstofffasern, Graphitfasern, Cellulosefasern, Polyacrylnitrilfasern, Keramikfasern aufgebracht wird.

7. Verfahren nach einem oder mehreren der Patentansprüche 1 bis 6,
**dadurch gekennzeichnet, dass**
beim Wickeln zusätzlich eine oder mehrere Lagen Folie (7) aufgebracht werden.

8. Verfahren nach Patentanspruch 7,
**dadurch gekennzeichnet, dass**
mindestens eine Folie (7) aus der Gruppe Graphitfolie oder Metallfolie aufgebracht wird.

9. Verfahren nach Patentanspruch 8,
**dadurch gekennzeichnet, dass**
mindestens eine Folie (7) aufgebracht wird, die Molybdän enthält.

10. Verfahren nach einem oder mehreren der Patentansprüche 1 bis 9,
**dadurch gekennzeichnet, dass**
das Gewebe aus Fasern aus Kohlenstoff, Graphit oder aus Molybdän besteht und die Fäden, Garne, Rovings oder Bänder (3) aus Einzelfilamenten oder Fasern aus Kohlenstoff, Graphit oder aus Molybdän bestehen.

11. Verfahren nach einem oder mehreren der Patentansprüche 1 bis 10,
**dadurch gekennzeichnet, dass**
zum Aufwickeln ein Gewebe verwendet wird, das unter Erhalt eines Gewebeprepregs (2; 4) mit Phenolharz, Epoxidharz, Pech oder Mischungen davon imprägniert ist, wobei das Harz noch nicht ausgehärtet ist.

12. Verfahren nach einem oder mehreren der Patentansprüche 1 bis 11,
**dadurch gekennzeichnet, dass** Prepreglagen (2; 4) aufgewickelt werden, werden, welche im Ausgangszustand eine Dicke im Bereich von 0,20 bis 2,00 mm aufweisen.

13. Verfahren nach Patentanspruch 12,
**dadurch gekennzeichnet, dass** die Dicke der Prepreglagen (2, 4) im Ausgangszustand 0,50 bis 1,00 mm beträgt.

14. Verfahren nach einem oder mehreren der Patentansprüche 1 bis 13,
**dadurch gekennzeichnet, dass**
die Rovings (3) aus 10.000 bis 60.000 Einzelfilamenten bestehen.

15. Verfahren nach Patentanspruch 14,
**dadurch gekennzeichnet, dass**
die Rovings (3) aus Kohlenstoff- oder Graphit-Einzelfilamenten bestehen, die eine Dichte von 1,75 bis 1,90 g/cm<3> haben.

16. Verfahren nach Patentanspruch 15,
**dadurch gekennzeichnet, dass**
die Roving (3) eine Zugfestigkeit im Bereich von 2200 bis 5000 MPa haben.

17. Verfahren nach einem oder mehreren der Patentansprüche 1 bis 16,
**dadurch gekennzeichnet, dass**
das Aufwickeln so geleitet wird, dass das Verhältnis der Anzahl der Lagen aus Gewebeprepreg (2; 4) zu den Lagen aus Faden-, Garn-, Roving- oder Bandwicklungen (3) 1:1 bis 4:1 beträgt.

18. Verfahren nach einem oder mehreren der Patentansprüche 1 bis 17,
**dadurch gekennzeichnet, dass**
die Fäden, Garne, Rovings oder Bänder (3) unter einem Winkel im Bereich von +/- 20 bis +/- 90° aufgewickelt werden.

19. Verfahren nach einem oder mehreren der Patentansprüche 1 bis 18,
**dadurch gekennzeichnet, dass**
das Wickeln der Fäden, Garne, Rovings oder Bänder (3) mit einer Geschwindigkeit im Bereich von 20 bis 200 m/min und mit einer Fadenspannung im Bereich von 10 bis 250 N je Faden, Garn, Roving oder Band (3) durchgeführt wird.

20. Bauteil (1) hergestellt nach dem Verfahren gemäß Patentansprüchen 1-19 **gekennzeichnet durch** den folgenden Aufbau, wobei die Lagen in der Reihenfolge von innen nach außen angegeben sind:
| | |
|---|---|
| 1. Lage | Gewebeprepreg |
| 2. Lage | Roving |
| 3. Lage | Gewebeprepreg |
| 4. Lage | Roving |
| 5. Lage | Gewebeprepreg |
| 6. Lage | Roving |

21. Bauteil (1) hergestellt nach dem Verfahren gemäß Patentansprüchen 1-19 **gekennzeichnet durch** den folgenden Aufbau, wobei die Lagen in der Reihenfolge von innen nach außen angegeben sind:
| | |
|---|---|
| 1. Lage | Vier Schichten Gewebeprepreg |
| 2. Lage | Eine Schicht Roving |
| 3. Lage | Eine Schicht Graphitfolie |
| 4. Lage | Eine Schicht Filz |
| 5. Lage | Eine Schicht Graphitfolie |
| 6. Lage | Eine Schicht Gewebeprepreg |
| 7. Lage | Eine Schicht Roving |
| 8. Lage | Eine Schicht Filz |
| 9. Lage | Eine Schicht Graphitfolie |
| 10. Lage | Eine Schicht Gewebeprepreg |
| 11. Lage | Eine Schicht Roving |
| 12. Lage | Eine Schicht Filz |
| 13. Lage | Eine Schicht Graphitfolie |
| 14. Lage | Eine Schicht Gewebeprepreg |
| 15. Lage | Eine Schicht Roving |

22. Bauteil (1) hergestellt nach dem Verfahren gemäß Patentansprüchen 1-19 **gekennzeichnet durch** folgenden Aufbau, wobei die Lagen in der Reihenfolge von innen nach außen angegeben sind:
| | |
|---|---|
| 1. Lage | Drei Schichten Gewebeprepreg |
| 2. Lage | Eine Schicht Roving |
| 3. Lage | Drei Schichten Gewebeprepreg |
| 4. Lage | Eine Schicht Roving. |

23. Verwendung eines nach einem Verfahren nach gemäß Patentansprüchen 1 bis 19 herstellbaren abwickelbaren Bauteils (1) als thermischer Isolationszylinder, Schutzrohr, Heizelement, Tragrohr, Heißpressmatrize oder thermischer Isolierkörper.

## Claims

1. A process for producing components (1) made from fibrous composites by winding at least one layer made from a fabric (2; 4) and at least two layers made from threads (3), yarns (3), rovings (3) or ribbons (3), at least the fabric (2; 4) or at least the threads, yarns, rovings or ribbons (3) being impregnated with a resin that has not yet cured, onto a shaping temporary mandrel so that the outer ply of the component consists of a layer of wound threads, yarns, rovings or ribbons (3), and curing of the component (1) obtained after the winding process,
**characterised in that**
each layer of threads, yarns, rovings or ribbons (3) is wound with an at least equally large thread tension in comparison to the previous layer of threads, yarns, rovings or ribbons (3).

2. A process according to claim 1, **characterised in that** the component (1) is produced from two or more layers of fabric (2; 4) and two or more layers of threads, yarns, rovings or ribbons (3), and **in that** each layer of threads, yarns, rovings or ribbons (3) is wound with a greater thread tension in comparison to the previous layer of threads, yarns, rovings or ribbons (3).

3. A process according to any one of claims 1 to 3, **characterised in that** both the fabrics (2; 4) and the threads (3), yarns (3), rovings (3) or ribbons (3) are impregnated with a resin that has not yet cured.

4. A process according to either claim 1 or claim 2, **characterised in that**, after the curing, the component (1) obtained is subjected to one of the following treatments:
carbonisation;
carbonisation and subsequent redensification;
carbonisation and subsequent graphitisation;
carbonisation, graphitisation and subsequent redensification.

5. A process according to one of claims 1 to 4, **characterised in that** one or more layers of felt (6) are additionally applied during winding.

6. A process according to claim 5, **characterised in that** at least one felt (6) from the group of felts made from carbon fibres, graphite fibres, cellulose fibres, polyacrylonitrile fibres, ceramic fibres is applied.

7. A process according to one or more of claims 1 to 6, **characterised in that** one or more layers of foil (7) are additionally applied during winding.

8. A process according to claim 7, **characterised in that** at least one foil (7) from the group of graphite foils or metal foils is applied.

9. A process according to claim 8, **characterised in that** at least one foil (7) is applied which contains molybdenum.

10. A process according to one or more of claims 1 to 9, **characterised in that** the fabric consists of fibres made from carbon, graphite or molybdenum and the threads, yarns, rovings or ribbons (3) consist of monofilaments or fibres made from carbon, graphite or molybdenum.

11. A process according to one or more of claims 1 to 10, **characterised in that** a fabric is used for winding which is impregnated with phenolic resin, epoxy resin, pitch or mixtures thereof to obtain a fabric prepreg (2; 4), the resin not yet having cured.

12. A process according to one or more of claims 1 to 11, **characterised in that** prepreg layers (2; 4) are wound which have a thickness in the range from 0.20 to 2.00 mm in the initial state.

13. A process according to claim 12, **characterised in that** the thickness of the prepreg layers (2; 4) is 0.50 to 1.00 mm in the initial state.

14. A process according to one or more of claims 1 to 13, **characterised in that** the rovings (3) consist of 10,000 to 60,000 monofilaments.

15. A process according to claim 14, **characterised in that** the rovings (3) consist of carbon or graphite monofilaments which have a density from 1.75 to 1.90 g/cm³.

16. A process according to claim 15, **characterised in that** the rovings (3) have a tensile strength in the range from 2,200 to 5,000 Mpa.

17. A process according to one or more of claims 1 to 16, **characterised in that** the winding is conducted in such a way that the ratio of the number of layers of fabric prepreg (2; 4) to the layers of thread, yarn, roving or ribbon windings (3) is 1:1 to 4:1.

18. A process according to one or more of claims 1 to 17, **characterised in that** the threads, yarns, rovings or ribbons (3) are wound at an angle in the range from ± 20 to ± 90°.

19. A process according to one or more of claims 1 to 18, **characterised in that** the winding of the threads, yarns, rovings or ribbons (3) is carried out at a speed in the range from 20 to 200 m/min and with a thread tension in the range from 10 to 250 N per thread, yarn, roving or ribbon (3).

20. Component (1) produced by the process according to claims 1 to 19, **characterised by** the following structure, the layers being given in the sequence from the inside outwards:
| | |
|---|---|
| 1st layer | fabric prepreg |
| 2nd layer | roving |
| 3rd layer | fabric prepreg |
| 4th layer | roving |
| 5th layer | fabric prepreg |
| 6th layer | roving |

21. Component (1) produced by the process according to claims 1 to 19, **characterised by** the following structure, the layers being given in the sequence from the inside outwards:
| | |
|---|---|
| 1st layer | four plies of fabric prepreg |
| 2nd layer | one ply of roving |
| 3rd layer | one ply of graphite foil |
| 4th layer | one ply of felt |
| 5th layer | one ply of graphite foil |
| 6th layer | one ply of fabric prepreg |
| 7th layer | one ply of roving |
| 8th layer | one ply of felt |
| 9th layer | one ply of graphite foil |
| 10th layer | one ply of fabric prepreg |
| 11th layer | one ply of roving |
| 12th layer | one ply of felt |
| 13th layer | one ply of graphite foil |
| 14th layer | one ply of fabric prepreg |
| 15th layer | one ply of roving |

22. Component (1) produced by the process according to claims 1 to 19, **characterised by** the following structure, the layers being given in the sequence from the inside outwards:
| | |
|---|---|
| 1st layer | three plies of fabric prepreg |
| 2nd layer | one ply of roving |
| 3rd layer | three plies of fabric prepreg |
| 4th layer | one ply of roving. |

23. Use of an unwindable component (1) that can be produced by a process according to claims 1 to 19 as a thermal insulation cylinder, protective tube, heating element, stay pipe, hot-press die or thermal insulation element.

## Revendications

1. Procédé de fabrication de composants (1) en matériaux renforcés par des fibres, par enroulement d'au moins une couche d'un tissu (2 ; 4) et d'au moins deux couches de fils (3), de filés (3), de stratifils (3) ou de bandes (3), selon lequel au moins le tissu (2 ; 4) ou au moins les fils, les filés, les stratifils ou les bandes (3) sont imprégnés par une résine non encore durcie, sur un mandrin de moulage temporaire de telle sorte que la couche extérieure de composant est composée d'une couche de fils, de filés, de stratifils ou de bandes (3) enroulés, puis durcissement du composant (1) obtenu après le processus d'enroulement,
**caractérisé en ce que**
chaque couche de fils, de filés, de stratifils ou de bandes (3) est enroulée avec au moins la même tension de fil que la couche de fils,de filés, de stratifils ou de bandes précédente.

2. Procédé selon la revendication 1,
**caractérisé en ce que**
le composant (1) est fabriqué à partir de deux couches de tissu (2 ; 4) ou plus et de deux couches de fils, de filés, de stratifils ou de bandes (3) ou plus, et chaque couche de fils, de filés, de stratifils ou de bandes (3) est enroulée avec une tension de fil supérieure à celle de la couche de fils, de filés, de stratifils ou de bandes (3) précédente,

3. Procédé selon l'une quelconque des revendications 1 à 3,
**caractérisé en ce qu'**
aussi bien les tissus (2, 4) que les fils (3), les filés (3), les stratifils (3) ou les bandes (3) sont imprégnés par une résine qui n'est pas encore durcie.

4. Procédé selon la revendication 1 ou 2,
**caractérisé en ce que**
le composant obtenu est soumis après le durcissement à l'un des traitement suivants :
carbonisation
carbonisation suivie d'une post-compression
carbonisation suivie d'une graphitisation
carbonisation, graphitisation suivies d'une post-compression.

5. Procédé selon l'une quelconque des revendications 1 à 4,
**caractérisé en ce qu'**
lors de l'enroulement, on applique une ou plusieurs couches de feutre (6).

6. Procédé selon la revendication 5,
**caractérisé en ce qu'**
on applique au moins un feutre (6) du groupe des feutres en fibres de carbone, de graphite, de cellulose, de polyacrylonitrile, de céramique est appliqué.

7. Procédé selon l'une quelconque ou plusieurs des revendications 1 à 6,
**caractérisé en ce que**
lors de l'enroulement, on applique une ou plusieurs couches de feuilles (7).

8. Procédé selon la revendication 7,
**caractérisé en ce qu'**
on applique au moins une feuille (7) du groupe des feuilles graphitiques ou métalliques,

9. Procédé selon la revendication 8,
**caractérisé en ce qu'**
on applique au moins une feuille (7) contenant du molybdène.

10. Procédé selon l'une quelconque ou plusieurs des revendications 1 à 9,
**caractérisé en ce que**
le tissu est composé de fibres de carbone, de graphite ou de molybdène et les fils, les filés, les stratifils ou les bandes (3) sont composés de filaments individuels ou de fibres de carbone, de graphite ou de molybdène.

11. Procédé selon l'une quelconque ou plusieurs des revendications 1 à 10,
**caractérisé en ce que**
pour l'enroulement, on utilise un tissu imprégné en réalisant un tissu préimprégné (2 ; 4) avec de la résine phénolique, de la résine époxy, de la poix ou des mélanges de ceux-ci, la résine n'étant pas encore durcie.

12. Procédé selon l'une quelconque ou plusieurs des revendications 1 à 11,
**caractérisé en ce qu'**
on enroule des couches de tissu préimprégné (2 ; 4) présentant à l'état initial une épaisseur de l'ordre de 0,20 à 2,00 mm.

13. Procédé selon la revendication 12,
**caractérisé en ce qu'**
à l'état initial l'épaisseur des couches de tissu préimprégné (2, 4) est comprise entre 0,50 et 1,00 mm.

14. Procédé selon l'une quelconque ou plusieurs des revendications 1 à 13,
**caractérisé en ce que**
les stratifils (3) comprennent entre 10 000 et 60 000 filaments individuels.

15. Procédé selon la revendication 14,
**caractérisé en ce que**
les stratifils (3) comprennent des filaments individuels carboniques ou graphitiques qui présentent une densité de 1,75 à 1,90 g/cm³.

16. Procédé selon la revendication 15,
**caractérisé en ce que**
les stratifils (3) présentent une résistance à la traction de l'ordre de 2200 à 5000 MPa.

17. Procédé selon l'une quelconque ou plusieurs des revendications 1 à 16,
**caractérisé en ce que**
l'enroulement est conduit de telle sorte que le rapport entre le nombre des couches de tissu préimprégné (2 ; 4) et les couches de fils, de filés, de stratifils ou de bandes (3) se situe entre 1/ 1 et 4/ 1.

18. Procédé selon l'une quelconque ou plusieurs des revendications 1 à 17,
**caractérisé en ce que**
les fils, les filés, les stratifils ou les bandes (3) sont enroulés selon un angle de l'ordre de +/- 20° à +/- 90°,

19. Procédé selon l'une quelconque ou plusieurs des revendications 1 à 18,
**caractérisé en ce que**
l'enroulement des fils, des filés, des stratifils ou des bandes (3) est réalisé à une vitesse de l'ordre de 20 à 200 m/min et avec une tension de fil de l'ordre de 10 à 250 N par fil, filé, stratifil ou bande (3).

20. Composant (1) fabriqué suivant le procédé selon les revendications 1 à 19,
**caractérisé par**
la structure suivante, les couches étant indiquées de l'intérieur vers l'extérieur :
| | |
|---|---|
| 1^{ère} couche | tissu prêimprégné |
| 2^{ème} couche | stratifil |
| 3^{ème} couche | tissu préimpregné |
| 4^{ème} couche | stratifil |
| 5^{ème} couche | tissu préimpregné |
| 6^{ème} couche | stratifil |

21. Composant (1) fabriqué suivant le procédé selon les revendications 1 à 19,
**caractérisé par**
la structure suivante, les couches étant indiquées de l'intérieur vers l'extérieur :
| | |
|---|---|
| 1^{ère} couche | quatre couches de tissu préimprégné |
| 2^{ème} couche | une couche de stratifil |
| 3^{ème} couche | une couche de feuille graphitique |
| 4^{éme} couche | une couche de feutre |
| 5^{ème} couche | une couche de feuille graphit-ique |
| 6^{ème} couche | une couche de tissu préimprégné |
| 7^{ème} couche | une couche de stratifil |
| 8^{ème} couche | une couche de feutre |
| 9^{ème} couche | une couche de feuille graphitique |
| 10^{ème} couche | une couche de tissu préimprégné |
| 11^{ème} couche | une couche de stratifil |
| 12^{ème} couche | une couche de feutre |
| 13^{ème} couche | une couche de feuille graphitique |
| 14^{ème} couche | une couche de tissu préimprégné |
| 15^{ème} couche | une couche de stratifil |

22. Composant (1) fabriqué suivant le procédé selon les revendications 1 à 19,
**caractérisé par**
la structure suivante, les couches étant indiquées de l'intérieur vers l'extérieur :
| | |
|---|---|
| 1^{ère} couche | trois couches de tissu préimprégné |
| 2^{ème} couche | une couche de stratifil |
| 3^{ème} couche | trois couches de tissu préimprégné |
| 4^{ème} couche | une couche de stratifil |

23. Utilisation d'un composant (1) déroulable pouvant être fabriqué suivant un procédé selon les revendications 1 à 19, comme cylindre isolant, tube de protection, élément chauffant, tube de support, matrice d'estampage à chaud ou corps d'isolation thermique.
